(19) Europäisches Patentamt
European Patent Office
Office européen des brevets

(11) **EP 3 006 209 B1**

(12) **EUROPEAN PATENT SPECIFICATION**

(45) Date of publication and mention
of the grant of the patent:
**21.12.2022 Bulletin 2022/51**

(21) Application number: **14804934.9**

(22) Date of filing: **27.05.2014**

(51) International Patent Classification (IPC):
**B32B 27/30** (2006.01)     **B32B 7/02** (2019.01)
**H01B 3/30** (2006.01)      **H01B 7/02** (2006.01)
**H01B 17/60** (2006.01)     **B32B 27/28** (2006.01)
**B32B 27/32** (2006.01)

(52) Cooperative Patent Classification (CPC):
**B32B 27/08; B32B 27/281; B32B 27/30;
B32B 27/304; B32B 27/322; C09J 7/25;
H01B 3/306; H01B 3/445;** B32B 2307/206;
B32B 2307/54; B32B 2307/554; B32B 2307/584;
B32B 2605/18

(86) International application number:
**PCT/JP2014/063944**

(87) International publication number:
**WO 2014/192733 (04.12.2014 Gazette 2014/49)**

(54) **INSULATED COATING MATERIAL AND USE OF SAME**

ISOLIERTES BESCHICHTUNGSMATERIAL UND VERWENDUNG DAVON

MATÉRIAU DE REVÊTEMENT ISOLÉ ET SON UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2013 JP 2013115923**

(43) Date of publication of application:
**13.04.2016 Bulletin 2016/15**

(73) Proprietor: **Kaneka Corporation
Osaka-shi, Osaka 530-8288 (JP)**

(72) Inventors:
• **KONDO, Yasutaka
Otsu-shi
Shiga 520-0104 (JP)**
• **TAWADA, Makoto
Otsu-shi
Shiga 520-0104 (JP)**
• **ONO, Kazuhiro
Otsu-shi
Shiga 520-0104 (JP)**

(74) Representative: **Hoffmann Eitle
Patent- und Rechtsanwälte PartmbB
Arabellastraße 30
81925 München (DE)**

(56) References cited:
**EP-A1- 1 498 909       EP-A1- 2 503 558
WO-A1-2009/032290       JP-A- H10 100 340
JP-A- S62 162 542       JP-A- S62 162 543
JP-A- 2007 030 501       JP-A- 2013 512 535**

**Description**

Technical Field

The present invention relates to an insulating coating material and use thereof. The present invention particularly relates to (i) an insulating coating material used for an electric wire, a cable, etc., for use in aerospace and (ii) use thereof.

Background Art

An insulating material for an electric wire or cable for use in aerospace is required to have durabilities such as abrasion resistance and cut-through resistance, in addition to heat resistance, electric insulating, chemical resistance, and flame retardancy.

For example, a multilayer polyimide-fluoropolymer insulating structure and an insulating wire/cable each of which has an excellent cut-through resistance, and the like have been developed for an electric wire etc. for use in aerospace (see, for example, Patent Literatures 1 through 3).

Patent Literature 4 describes an asymmetric multi-layer insulative film that is made by combining a layer of polyimide and a high-temperature bonding layer, the high-temperature bonding layer being derived from a high temperature base polymer made of poly(tetrafluoroethylene-co-perfluoroalkyl vinyl ether) (PFA) and optionally blended with from 0-60 wt.% poly(tetrafluoroethylene-co-hexafluoropropylene) (FEP).

Patent Literature 5 describes a multilayer polyimide-fluoropolymer insulation structure that comprises a base layer of polyimide having first and second major surfaces and a first fluoropolymer layer. The first fluoropolymer layer comprises from about 70 to about 98% by weight of fluoroethylene propylene polymer ('FEP') and from about 30 to about 2% by weight of polytetrafluoroethylene polymer ('PTFE') or poly(tetrafluoroethylene-co-perfluoro[alkyl vinyl ether]) ('PFA') based on the total weight of the first fluoropolymer layer.

Patent Literature 6 describes a polyimide film composed of a polyimide and a sub-micron filler. The polyimide is derived from at least one aromatic dianhydride component selected from rigid rod dianhydride, non-rigid rod dianhydride and combinations thereof, and at least one aromatic diamine component selected from rigid rod diamine, non-rigid rod diamine and combinations thereof.

Citation List

[Patent Literature]

> [Patent Literature 1]
> Japanese Patent Application Publication, Tokukaihei, No. 10-100340
> [Patent Literature 2]
> United States Patent Application Publication, No. 2010/0282488
> [Patent Literature 3]
> United States Patent Publication, No. 7022402
> [Patent Literature 4]
> European Patent Application No. EP 1 498 909 A1
> [Patent Literature 5]
> European Patent Application No. EP 2 503 558 A1
> [Patent Literature 6]
> Japanese Patent Application No. JP 2013-512535 A

Summary of Invention

Technical Problem

Among the above durabilities, abrasion resistance is an important property. Particularly, it can be said that, in terms of security, the more excellent abrasion resistance an insulating coating material used for an electric wire, a cable, etc. for use in aerospace has, the more preferable it is. Therefore, there had been a strong demand for development of a novel insulating coating material having an excellent abrasion resistance.

Solution to Problem

The inventors of the present invention made a diligent study in order to meet the demand, found that it was possible to obtain an insulating coating material having an excellent abrasion resistance by using a resin having a specific tensile stress at x% strain, and completed the present invention. That is, the present invention encompasses the following invention.

(1) An insulating coating material including: an insulating film made from a polyimide resin; and an adhesive layer made from a fluorocarbon resin, the insulating film having a tensile stress at 5% strain of not less than 180 MPa and a tensile stress at 15% strain of not less than 225 MPa, the stresses being obtained by measuring a tensile modulus according to ASTM D882.
(2) A method of producing an insulating coating material that includes (i) an insulating film made from a polyimide resin and (ii) an adhesive layer made from a fluorocarbon resin,

the insulating film being a polyimide film obtained by imidizing a polyamic acid which is obtained by reacting a diamine component and a dianhydride component,
the polyamic acid being obtained by a production method including the steps of:

(A) reacting the dianhydride component and the diamine component in an organic polar solvent in a state where either the dianhydride component or the diamine component has excessive moles, so as to obtain a prepolymer having amino groups or dianhydride groups at both terminals; and
(B) synthesizing the polyamic acid with use of (i) the prepolymer obtained in the step (A) and (ii) a dianhydride component and (iii) a diamine component equal in molar quantity to one another in all steps,

the method including the step of:

forming the adhesive layer for the insulating film,
in a case where a total number of moles of the dianhydride component and the diamine component which are used in the step (A) is 100 mol%, an ether amount represented below is not less than 35.0 mol% and not more than 70.0 mol%, the ether amount being a sum total mol% of an oxygen atom derived from an ether bond included by the dianhydride component and the diamine component which are used in the step (A).

(3) An insulating cable including the insulating coating material as set forth in (1) above.
(4) A method of producing an insulating cable, including the steps of:

carrying out the method, as set forth in (2) above, of producing an insulating coating material; and
winding, around an electric conductor, the insulating coating material obtained by the method of producing the insulating coating material.

Advantageous Effects of Invention

An insulating coating material of the present invention brings about an effect of being excellent in abrasion resistance. Therefore, the insulating coating material is useful for, for example, an electric wire, a cable, etc., for use in aerospace.

Brief Description of Drawings

Fig. 1 is a graph showing (i) a physical property of an insulating film included by an insulating coating material of an embodiment of the present invention and (ii) a relation between a thickness (pm) of the insulating film obtained in Example and abrasion resistance (the number of times).
Fig. 2 includes the graph of Fig. 1 and numerical expressions (A) through (C), and is a graph showing a relation between the graph of Fig. 1 and the numerical expressions (A) through (C).

Description of Embodiments

The following description will discuss in detail an embodiment of the present invention, as well as Reference Embodiments that are provided for background information. Note that all academic documents and patent literatures described in this specification are used as references in this specification. Note also that, unless otherwise specified in this specification, "A to B" indicative of a numerical range means "not less than A (A or more) and not more than B (B or less)", "%" means "% by mass", and "part" means "part by mass".

[Embodiment 1]

< 1. Insulating coating material>

An insulating coating material of the present invention is an insulating coating material including an insulating film and an adhesive layer(s). The insulating film needs only to have a tensile stress at 5% strain of not less than 180 MPa and a tensile stress at 15% strain of not less than 225 MPa, the stresses being obtained by measuring a tensile modulus according to ASTM D882. Other specific configuration, material, etc. of the insulating film are not particularly limited.

The inventors of the present invention made repetitive diligent studies on durability of an insulating coating material, and consequently newly found that, in a case where an insulating film used as a base film of the insulating coating material meets two conditions, i.e., (i) having a high yield strength and (ii) being unlikely to plastically deform, the insulating coating material shows an excellent abrasion resistance.

The "yield strength" can be evaluated from "tensile stress at 5% strain" obtained by measuring a tensile modulus according to ASTM D882. For example, "having a high yield strength" means "a tensile stress at 5% strain of not less than 180 MPa" in this specification.

The property of "being unlikely to plastically deform" means that stress increases during plastic deformation, or a large stress is required during plastic deformation. The property of "being unlikely to plastically deform" can also be called, for example, "gradient (that is, gradient of an s-s curved line)" shown by a graph that shows a result obtained by measuring a tensile modulus according to ASTM D882 in which graph a vertical axis shows "stress (MPa)" and a horizontal axis shows "stroke (mm)". Specific examples of the gradient of the s-s curved line include (i) a gradient from a "tensile stress at 5% strain" to a "tensile stress at 15% strain", (ii) a gradient from a "tensile stress at 10% strain" to the "tensile stress at 15% strain", (iii) a gradient from the "tensile stress at 10% strain" to a "tensile stress at 20% strain", (iv) a gradient from the "tensile stress at 15% strain" to the "tensile stress at 20% strain", etc. However, "tensile stress at x% strain", which is one component of a straight line from which the gradient is read, differs from one insulating film to another insulating film. It is therefore difficult to undoubtedly define the property of "being unlikely to plastically deform" from the "gradient". In this specification, the property of "being unlikely to plastically deform" is evaluated from a "tensile stress at 15% strain" obtained by measuring a tensile modulus according to ASTM D882. Specifically, in this specification, in order to bring about a desired effect which the present invention intends, the property of "being unlikely to plastically deform" is preferably "a tensile stress at 15% strain of not less than 225 MPa", taking into account that the aforementioned property "high yield strength" is also required.

The property of "being unlikely to plastically deform" can also be evaluated from a "tensile stress at 10% strain" and/or a "tensile stress at 20% strain" which are/is obtained by measuring a tensile modulus according to ASTM D882. For example, the insulating film of the insulating coating material of the present invention further preferably has the tensile stress at 10% strain of not less than 210 MPa and/or the tensile stress at 20% strain of not less than 235 MPa. The property of "being unlikely to plastically deform" can also be evaluated from a "tensile stress at 25% strain". In this case, the tensile stress at 25% strain is preferably not less than 250 MPa.

As a result of the studies made by the inventors of the present invention, it was also found that, for the purpose of improving abrasion resistance of an insulating coating material, (a) there is a case where a mere large modulus of elasticity of an insulating film is insufficient, (b) there is a case where a mere high breaking strength (which can also be called level of a "tensile stress at x% strain" when the insulating film is elongated to be broken, i.e., a maximum tensile stress) of the insulating film is insufficient, (c) there is a case where a mere high yield strength of the insulating film is insufficient, (d) there is a case where merely "being unlikely to plastically deform" is insufficient, and (e) a high yield strength of the insulating film and being unlikely to plastically deform are effective. That is, according to the prevent invention, the insulating film should simultaneously meet two properties, i.e., (i) a high yield strength and (ii) being unlikely to plastically deform. This finding is not conventionally known but is an epoch-making and novel finding uniquely made by the inventors of the present invention.

In this specification, "tensile stress at x% strain" means a stress when strain reaches a prescribed value (x%). For Example, "tensile stress at x% strain" is used when a stress-strain curved line does not indicate a yield point. Note that, as mentioned for reference, "tensile stress at x% strain" is a generally defined indicator, and is not a so-called special parameter. For example, JIS (the Japanese Industrial Standards) (JIS K7161) defines that the value of x should comply with standards of a material to be tested or an agreement between a deliverer and a recipient. Note, however, that, in this specification, the definition of "tensile stress at x% strain" puts priority on measurement according to ASTM D882 (later described), and JIS is regarded as mere reference information.

"Tensile stress at x% strain" can be measured from measurement data of a tensile modulus. Note that the tensile modulus is measured according to ASTM D882.

The insulating film more preferably has the "tensile stress at 5% strain" of not less than 200 MPa, the "tensile stress at 10% strain" of not less than 220 MPa, the "tensile stress at 15% strain" of not less than 235 MPa, the "tensile stress at 20% strain" of not less than 245 MPa, and the "tensile stress at 25% strain" of not less than 260 MPa.

The insulating film still more preferably has the "tensile stress at 5% strain" of not less than 210 MPa, the "tensile stress at 10% strain" of not less than 230 MPa, the "tensile stress at 15% strain" of not less than 245 MPa, the "tensile stress at 20% strain" of not less than 255 MPa, and the "tensile stress at 25% strain" of not less than 265 MPa.

Some insulating films are unlikely to elongate. Therefore, there may be a case where it is not possible to measure, for example, the "tensile stress at 20% strain" and the "tensile stress at 25% strain". Just to be sure, the following is additionally described. That is, in the above case, from the purpose of the present invention, at least the "tensile stress at 5% strain" and the "tensile stress at 15% strain" need only to be measured, and it is unnecessary to refer to the "tensile stress at 20% strain" and the "tensile stress at 25% strain".

Taking the technical idea of the present invention into account, it can be said that the larger the "tensile stress at x% strain" is, the more preferable it is, and there is no particular need to set an upper limit of the "tensile stress at x% strain". If the upper limit is dared to be set, it is preferable that the upper limit of the "tensile stress at 5% strain" be 500 MPa, the upper limit of the "tensile stress at 10% strain" be 540 MPa, the upper limit of the "tensile stress at 15% strain" be 560 MPa, and the upper limit of the "tensile stress at 20% strain" be 580 MPa.

A thickness of the insulating film is not particularly limited. However, for example, the thickness is preferably not more than 25 $\mu$m, more preferably not more than 20 $\mu$m, and particularly preferably not more than 17 $\mu$m. A lower limit of the thickness is neither particularly limited. However, the lower limit needs only to be, for example, not less than 5 $\mu$m.

A relation between thickness of an insulating film and abrasion resistance is mentioned as follows. There is a tendency that as the thickness of the insulating film increases, the abrasion resistance increases. Here, for example, an insulating cable for use in an aircraft is strongly required to be lightweight. As the thickness of the insulating film is simply increased, the abrasion resistance is improved. This, however, results in increase in weight. That is, it is necessary to improve the abrasion resistance without increasing the thickness of the insulating film as much as possible. The insulating coating material of the present invention, which includes a thick insulating film, needless to say, has an excellent abrasion resistance as compared to a conventional insulating coating material. Even the insulating coating material of the present invention, which includes a thin insulating film, also has the excellent abrasion resistance as compared to the conventional insulating coating material.

The insulating coating material of the present invention includes the insulating film, and the adhesive layer(s) on one surface or both surfaces of the insulating film. A separation film(s) to be separated when the adhesive layer(s) is/are used may be attached to a surface(s) of the adhesive layer(s) so as to protect the surface(s) of the adhesive layer(s) before the adhesive layer(s) is/are used.

A shape of the insulating coating material is not particularly limited. However, for example, the shape is preferably a shape which allows the insulating coating material to be easily fused with an electrical conductor such as an electric wire or a conducting wire (e.g., a cable (wire)). In a case where a conductor to be insulating-coated is a long conductor such as an electric wire, the insulating coating material is preferably long so as to wrap and be fused with the long conductor. In a case where a plate-like conductor having a relatively large surface area is insulating-coated, the insulating coating material preferably has a shape (similar shape) slightly larger than the plate-like conductor so as to be stacked on and fused with the plate-like conductor.

Note that any conventional methods and a combination thereof can be used as a method of fusing the insulating coating material with a conductor.

The insulating film and the adhesive film(s) will be described in further detail below.

<2. Insulating film>

An insulating film which can be used in the insulating coating material of the present invention can be made from various insulating materials, and is not particularly limited. Examples of the insulating materials include polyurethane resin, poly(meth)acrylic resin, polyvinyl resin, polystyrene resin, polyethylene resin, polypropylene resin, polyimide resin, polyamide resin, polyacetal resin, polycarbonate resin, polyester resin, polyphenylene ether resin, polyphenylene sulfide resin, polyether sulfone resin, polyether ether ketone resin, and the like. These resins can be used independently or in combination of at least two kinds of the resins. Taking into account properties such as heat resistance, electric insulating, chemical resistance, and flame retardancy, a polyimide film made from the polyimide resin among these resins is particularly preferable.

The polyimide film is produced with polyamic acid serving as a precursor (hereinafter, the term "polyamic acid" sometimes means a polyimide precursor in this specification). The polyamic acid can be produced by any conventional methods. A method of producing the polyamic acid is not particularly limited. For example, usually, a dianhydride component and a diamine component which equal to each other in molar quantity are dissolved in an organic solvent, so that a polyamic acid organic solvent solution is obtained. The obtained polyamic acid organic solvent solution is stirred under a controlled temperature condition so that the dianhydride component and the diamine component are completely polymerized. Consequently, the polyamic acid is produced. A polyamic acid solution including the polyamic acid organic solvent solution usually has a concentration of 5 wt% to 35 wt%, and preferably 10 wt% to 30 wt%. The polyamic acid solution having this concentration range can obtain suitable molecular weight and solution viscosity.

Note that "equal in molar quantity" in this specification means not only a case where the dianhydride component and the diamine component completely equal to each other in molar quantity but also a case where the dianhydride component and the diamine component substantially equal to each other in molar quantity.

The dianhydride component and the diamine component can be polymerized by any conventional methods or a combination thereof. A method of polymerizing the dianhydride component and the diamine component is not particularly limited. Note that one of characteristics of a method of producing polyamic acid is an order in which monomers are added. It is possible to control properties of an obtained polyimide by adjusting the order in which monomers are added.

According to the present invention, any method of adding the monomers can be used to produce the polyamic acid, and is not particularly limited. The following methods etc. can be used as a typical production method.

1) A method of producing the polyamic acid by dissolving aromatic diamine in an organic polar solvent and reacting aromatic tetracarboxylic dianhydride equal in molar quantity to the aromatic diamine.

2) A method of producing the polyamic acid by (i) reacting, in an organic polar solvent, aromatic tetracarboxylic dianhydride and an aromatic diamine compound that has fewer moles than the aromatic tetracarboxylic dianhydride so as to obtain a prepolymer having acid anhydride groups at its both terminals, and then (ii) using an aromatic diamine compound so that aromatic tetracarboxylic dianhydride equals in molar quantity to the aromatic diamine compound in all steps.

3) A method of producing the polyamic acid by (i) reacting, in an organic polar solvent, aromatic tetracarboxylic dianhydride and an aromatic diamine compound that has excessive moles than the aromatic tetracarboxylic dianhydride so as to obtain a prepolymer having amino groups at its both terminals, and then (ii), after adding an aromatic diamine compound to the prepolymer, using aromatic tetracarboxylic dianhydride so that the aromatic tetracarboxylic dianhydride equals in molar quantity to the aromatic diamine compound in all steps.

4) A method of producing the polyamic acid by (i) dissolving and/or dispersing aromatic tetracarboxylic dianhydride in an organic polar solvent and then (ii) using an aromatic diamine compound equal in molar quantity to the aromatic tetracarboxylic dianhydride.

5) A method of producing the polyamic acid by reacting, in an organic polar solvent, a mixture of aromatic tetracarboxylic dianhydride and aromatic diamine which are equal in molar quantity to each other.

These production methods can be used independently or in partial combination.

An example of a preferable polymerization method for obtaining a polyimide resin in the present invention is a method of forming a block component of a precursor of a polyimide and then completely forming the precursor of the polyimide with use of residual diamine and/or dianhydride. In this case, it is preferable to use the above methods 1) through 5) in partial combination.

Examples of a diamine component usable as a main component includes 4,4'-diaminodiphenyl propane, 4,4'-diaminodiphenyl methane, 4,4'-diaminodiphenyl sulfide, 3,3'-diaminodiphenyl sulfone, 4,4'-diaminodiphenyl sulfone, 4,4'-oxydianiline, 3,3'-oxydianiline, 3,4'-oxydianiline, 4,4'-diaminodiphenyldiethyl silane, 4,4'-diaminodiphenyl silane, 4,4'-diaminodiphenyl ethyl phosphine oxide, 4,4'-diaminodiphenyl N-methylamine, 4,4'-diaminodiphenyl N-phenylamine, 1,4-diaminobenzene(p-phenylenediamine), bis{4-(4-aminophenoxy)phenyl}sulfone, bis{4-(3-aminophenoxy) phenyl} sulfone, 4,4'-bis(4-aminophenoxy)biphenyl, 4,4'-bis(3-aminophenoxy)biphenyl, 1,3-bis(3-aminophenoxy)benzene, 1,3-bis(4-aminophenoxy)benzene, 1,4-bis(4-aminophenoxy) benzene, 1,3-bis(3-aminophenoxy)benzene, 3,3'-diaminobenzophenone, 4,4'-diaminobenzophenone, 2,2'-dimethyl-4,4'-diaminobiphenyl, 2,2-bis(4-aminophenoxyphenyl)propane, 3,3'-dihydroxy-4,4'-diamino-1,1'-biphenyl, and the like. These can be used independently or in combination. In addition to the diamines, any diamine can be used as an accessory component. Examples of a particularly preferably usable diamine among these include 4,4'-oxydianiline, 1,3-bis(4-aminophenoxy)benzene, 3,4'-oxydianiline, 1,4-diaminobenzene(p-phenylenediamine), and 2,2-bis[4-(4-aminophenoxy)phenyl]propane.

Examples of a suitably usable dianhydride component include pyromellitic dianhydride, 2,3,6,7-naphthalene tetracarboxylic dianhydride, 3,3',4,4'-benzophenone tetracarboxylic dianhydride, 2,2',3,3'-biphenyl tetracarboxylic dianhydride, 3,3',4,4'-biphenyl tetracarboxylic dianhydride, 2,2-bis(3,4-dicarboxyphenyl)propane dianhydride, p-phenylene bis(trimellitic acid monoester acid anhydride, 4,4'-oxydiphthalic dianhydride, and the like. These can be used independently or in combination. It is preferable in the present invention to use at least one of pyromellitic dianhydride, 3,3',4,4'-benzophenone tetracarboxylic dianhydride, and 3,3',4,4'-biphenyl tetracarboxylic dianhydride.

A preferable solvent for synthesizing a polyamic acid may be any solvent which can dissolve the polyamic acid, and is not particularly limited. Examples of the solvent include amide solvents, i.e., N,N-dimethylformamide, N,N-dimethylacetamide, N-methyl-2-pyrolidone, and the like. Among these, N,N-dimethylformamide and N,N-dimethylacetamide are particularly preferably usable.

A filler can be added to a polyimide film for the purpose of improving properties of the polyimide film such as slidability, thermal conductivity, electric conductivity, corona resistance, and loop stiffness. Any filler can be used. Preferable examples of the filler include silica, titanium oxide, alumina, silicon nitride, boron nitride, calcium hydrogen phosphate, calcium phosphate, mica, and the like.

The polyimide film can be produced from a polyamic acid solution according to various methods. A method of producing the polyimide film from the polyamic acid solution is not particularly limited. Examples of the method include a thermal imidization method and a chemical imidization method. Any one of these imidization methods can be used to produce the polyimide film.

A particularly preferable process of producing the polyimide film in the present invention preferably includes the steps of:

i) reacting aromatic diamine and aromatic tetracarboxylic dianhydride in an organic solvent to obtain a polyamic acid solution;
ii) flow-casting, onto a support, a film-forming dope including the polyamic acid solution;
iii) heating the film-forming dope on the support and then peeling a gel film from the support; and
iv) further heating the gel film so as to imidize a residual amic acid, and drying the gel film.

In the steps, it is allowed to use a curing agent which includes (i) a dehydrating agent typified by acid anhydride such as acetic anhydride and (ii) an imidization catalyst typified by tertiary amine etc. such as isoquinoline, quinoline, β-picoline, pyridine, or diethylpyridine.

No particular limitation is put on a method for obtaining the insulating film which simultaneously meets the aforementioned two properties, i.e., the property of high yield strength and the property of being unlikely to plastically deform. A person skilled in the art can obtain the insulating film by rational trial and error on the basis of the disclosure of this specification and the state of the art at the time of filing of the present application. Examples of a preferable method for obtaining the insulating film meeting the two properties will be described below for reference.

a) Oxydianiline (ODA) is used as a diamine component. The ODA to be used preferably accounts for not less than 15 mol% of all diamine components.
b) A polyimide precursor is formed through (i) a first stage of reacting a dianhydride component and a diamine component in an organic polar solvent in a state where either the dianhydride component or the diamine component has excessive moles, so as to obtain a prepolymer having amino groups or dianhydride groups at both terminals, and (ii) a second stage of synthesizing a polyamic acid-containing solution with use of the prepolymer obtained in the first stage, a dianhydride component, and a diamine component equal in molar quantity to one another in all steps. The prepolymer synthesized in the first stage may be a prepolymer having a flexible chemical structure or a prepolymer having a rigid chemical structure. Note that the "flexible chemical structure" means a chemical structure showing flexibility at high temperature, and is antonymous with the "rigid chemical structure". Whether or not a chemical structure is the "flexible chemical structure" can be determined by a method described in <Step (A)> of Embodiment 4 (later described).
c) Preferable examples of dianhydride used to produce a prepolymer having a rigid chemical structure include, e.g., pyromellitic dianhydride (PMDA), and 3,3',4,4'-biphenyl tetracarboxylic dianhydride (BPDA). A preferable example of diamine is p-phenylenediamine (PDA). The total amount of the PMDA and BPDA is preferably 40 mol% to 90 mol% of dianhydrides of an entire polyimide. It is further preferable to form the prepolymer having the rigid chemical structure in a second stage.
d) A prepolymer having a flexible chemical structure preferably includes an ether bond. For example, in the prepolymer, a dianhydride component and/or a diamine component which include(s) the ether bond account(s) for not more than 35 mol% to 70 mol% with respect to 100 mol% in total of a dianhydride component(s) and a diamine component(s) to be used. The prepolymer to be synthesized preferably includes 3,3',4,4'-benzophenone tetracarboxylic dianhydride (BTDA). For example, the BTDA preferably accounts for 10 mol% to 55 mol% of all dianhydrides which form a polyimide precursor. Note that Embodiment 4 (later described) describes an example of a specific embodiment of the above b) through d).

e) BPDA is used as a dianhydride component. Of all dianhydride components, the BPDA to be used accounts for preferably not less than 30 mol%, more preferably not less than 50 mol%, still more preferably not less than 70 mol%, and particularly preferably not less than 90 mol%. The BPDA to be used may account for 100 mol% of the all dianhydride components.

Note that the above methods are mere examples, and may be applied independently or in combination. The method for obtaining the insulating film meeting the two properties is not limited to the above methods.

In particular, it is preferable that (i) the insulating film be a polyimide film obtained by imidizing a polyamic acid which is obtained by reacting a diamine component and a dianhydride component and (ii) the dianhydride component include at least one compound selected from the group consisting of 3,3',4,4'-benzophenone tetracarboxylic dianhydride (BTDA) and 3,3',4,4'-biphenyl tetracarboxylic dianhydride (BPDA).

<3. Adhesive layer>

Various adhesive layers can be used as an adhesive layer usable in the insulating coating material of the present invention. No particular limitation is put on the adhesive layer usable in the insulating coating material of the present invention. The adhesive layer may be made from any material, provided that the adhesive layer can adhere an insulating film to a conductor such as an electric wire or a conducting wire (e.g., a cable (wire)). For example, thermoplastic resins are preferably used. Among the thermoplastic resins, a fluorocarbon resin is more preferably used in terms of insulating, chemical resistance, and the like.

Examples of the fluorocarbon resin include a tetrafluoroethylene polymer, a tetrafluoroethylene-hexafluoropropylene copolymer, a tetrafluoroethylene-perfluoro (alkyl vinyl ether) copolymer, a tetrafluoroethylene-ethylene copolymer, polychlorotrifluoroethylene, an ethylene-chlorotrifluoroethylene copolymer, polyvinylidene fluoride, a vinylidene fluoride-hexafluoropropylene copolymer, polyvinyl fluoride, and the like. These fluorocarbon resins can be used independently or in combination of at least two kinds of the fluorocarbon resins. Among these, the tetrafluoroethylene polymer or the tetrafluoroethylene-perfluoro (alkyl vinyl ether) copolymer is preferably used.

A thickness of the adhesive layer is not particularly limited, but is, for example, preferably 0.5 $\mu$m to 25 $\mu$m, more preferably 0.5 $\mu$m to 20 $\mu$m, still more preferably 1.0 $\mu$m to 15 $\mu$m, and particularly preferably 1.0 $\mu$m to 12.5 $\mu$m.

At least one adhesive layer may be formed on the insulating film. That is, the insulating coating material may have a two-layer structure. Alternatively, adhesive layers may be formed on respective opposite surfaces of the insulating film. That is, the insulating coating material may have a three-layer structure. Alternatively, a plurality of adhesive layers may be formed on one of the opposite surfaces of the insulted film. Alternatively, one adhesive layer may be formed on one of the opposite surfaces of the insulted film, and a plurality of adhesive layers may be formed on the other of the opposite surfaces of the insulted film. Alternatively, a plurality of adhesive layers may be formed on each of the opposite sides of the insulating film. That is, for example, it is possible to produce the insulating coating material of the present invention by coating, with the adhesive layer including the fluorocarbon resin, one of the opposite surfaces of or the opposite surfaces of the insulating film such as a polyimide film serving as a base layer.

<4. Use of insulating coating material>

The present invention can encompass an insulating cable including the insulating coating material. The insulating cable is suitably applicable to, for example, an electric cable or a cable for use in aerospace.

The insulating cable can be produced by various methods. A method of producing the insulating cable is not particularly limited. The insulating cable can be produced by, for example, (i) slitting the insulating coating material into tapes of the insulating coating material each of which tapes has a narrow width, and then (ii) spirally (swirlingly) winding the tapes of the insulating coating material around an electric conductor (e.g., a metal etc.) The tapes of the insulating coating material may be wound double around the electric conductor.

Tension is applied to the tapes of the insulating coating material when the tapes of the insulating coating material are wound around the electric conductor. The tension can be broadly changed within a range from a tension strong enough to avoid occurrence of wrinkling to a tension strong enough to generate neck-down which is caused by pulling the tapes. Note that, even in a case of a weak tension, the tape shrinks to some extent due to heat (e.g., 240°C to 500°C) applied in a heat seal step which is carried out after the tapes are wound, and therefore, consequently, the electric conductor is closely wrapped by the tapes. Note also that the heat seal step can be determined as appropriate according to (i) the thickness of the insulating film, (ii) the thickness of the adhesive layer, (iii) a material of the electric conductor, (iv) speed of a production line, (v) the length of a seal oven, and the like.

The insulating coating material can also be wound around the electric conductor with use of a standard electric wire coating machine (wrapping machine) etc.

[Reference Embodiment 2]

Reference Embodiment 2 of an insulating coating material will be described. Note that (i) Reference Embodiment 2 describes only part different from Embodiment 1 of the invention, (ii) matters which Reference Embodiment 2 does not particularly describe are considered to be common to those which Embodiment 1 describes, and (iii) the matters which Embodiment 1 describes are cited in Reference Embodiment 2.

An insulating coating material of Reference Embodiment 2 is an insulating coating material including an insulating film and an adhesive layer, and is configured so that a thickness (pm) of the insulating film and an abrasion resistance (the number of times) meet the following numerical expression (A)

$$\text{Thickness of insulating film} < 6.05 \times \ln(\text{abrasion resistance}) + 11.0 \cdots (A)$$

(where the abrasion resistance is an average of five measurements which are obtained by measuring, five times, according to British Standard Aerospace Series BS EN3475-503, an abrasion resistance of a wire to be evaluated which wire is obtained by (i) stacking a stainless steel plate, a buffer (e.g., "KINYO BOARD (manufactured by KINYOSHA CO., LTD.)" in Example), a laminated material, a buffer (e.g., "KINYO BOARD (manufactured by KINYOSHA CO., LTD.)" in Example), and a stainless steel plate in this order, the laminated material being obtained by stacking an insulating film, a tetrafluoroethylene-hexafluoropropylene copolymer (FEP) film (12 pm), a conducting wire whose diameter is 1 mm, an FEP film (12 pm), and an insulating film in this order, and (ii) applying a pressure of 78 kgf/cm$^2$ at 280°C for 10 minutes). Note that the "ln" represents a natural logarithm (the "ln" is sometimes represented by "Ln").

Examples of the conducting wire include an electric wire and a conducting wire such as a cable (wire). Particularly, an electric wire and a conducting wire such as a cable for use in aerospace are suitably applied.

In addition to the numerical expression (A), the insulating film more preferably further meets the following numerical expression (B):

$$\text{Thickness of insulating film} < 5.95 \times \ln(\text{abrasion resistance}) + 10.5 \cdots (B)$$

(where the abrasion resistance is similar to that in the numerical expression (A)).

In addition to the numerical expressions (A) and (B), the insulating film more preferably further meets the following numerical expression (C):

$$\text{Thickness of insulating film} < 5.85 \times \ln(\text{abrasion resistance}) + 10.0 \cdots (C)$$

(where the abrasion resistance is similar to that in the numerical expression (A)).

The numerical expressions (A) through (C) are expressions which the inventors of the present invention found by making diligent studies on the basis of the finding. It is possible to thin the insulating film by meeting the numerical expressions (A) through (C), even in a case where the abrasion resistances equal to one another. This makes it possible to realize a light-weight insulating coating material.

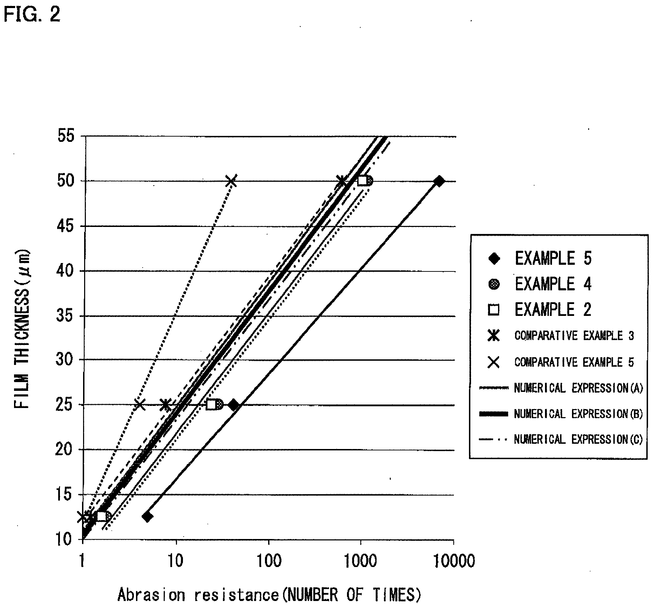

More specifically, as shown in Fig. 2 (semi-logarithmic graph), the numerical expression (A) is close to a graph obtained from the result of Comparative Example 3 (later described), and is obtained by mathematicizing a relation between (i) a thickness ($\mu$m) of an insulating film of an insulating coating material having physical properties which exceed those of an insulating coating material of Comparative Example 3 and (ii) abrasion resistance (the number of times). The numerical expression (A) defines gradient of and intercept of the mathematicized relation from Fig. 2 (taking into account an error of a measurement result). The numerical expression (C) is close to a graph obtained from the result of Example 2 (later described), and is obtained by mathematicizing a relation between (i) a thickness of an insulating film of an insulating coating material having a particularly preferable physical property and (ii) abrasion resistance (the number of times). The numerical expression (C) defines gradient of and intercept of the mathematicized relation from Fig. 2. The numerical expression (B) is located between the numerical expression (A) and the numerical expression (C), and is obtained by mathematicizing a relation between (i) a thickness of an insulating film of an insulating coating material having a more preferable physical property and (ii) abrasion resistance (the number of times). The numerical expression (B) defines gradient of and intercept of the mathematicized relation from Fig. 2.

As such, the relation between the thickness of the insulating film and the abrasion resistance (the number of times) of the insulating coating material of the present invention more preferably meets the numerical expression (B), and particularly preferably meets the numerical expression (C).

In particular, it is preferable that (i) the insulating film be a polyimide film obtained by imidizing a polyamic acid which is obtained by reacting a diamine component and a dianhydride component and (ii) the dianhydride component include at least one compound selected from the group consisting of 3,3',4,4'-benzophenone tetracarboxylic dianhydride (BTDA) and 3,3',4,4'-biphenyl tetracarboxylic dianhydride (BPDA).

The insulating coating material of Embodiment 2, which includes a thick insulating film, needless to say, has an excellent abrasion resistance as compared to a conventional insulating coating material. Even the insulating coating material of Reference Embodiment 2, which includes a thin insulating film, has the excellent abrasion resistance as compared to the conventional insulating coating material.

[Reference Embodiment 3]

Reference Embodiment 3 of an insulating coating material will be described. Note that, similar to Reference Embodiment 2, (i) Reference Embodiment 3 describes only part different from Embodiment 1, (ii) matters which Reference Embodiment 3 does not particularly describe are considered to be common to those which Embodiment 1 describes, and (iii) the matters which Embodiment 1 describes are cited in Reference Embodiment 3.

An insulating coating material of Reference Embodiment 3 is an insulating coating material including an insulating film and an adhesive layer. The insulating film is a polyimide film obtained by imidizing a polyamic acid which is obtained by reacting a diamine component and a dianhydride component. The diamine component contains PDA at a ratio of 65 mol% to 100 mol%. The dianhydride component contains BPDA at a ratio of 20 mol% to 100 mol%.

It is preferable in the insulating coating material that the dianhydride component further contains 3,3',4,4'-benzophenone tetracarboxylic dianhydride (BTDA) at a ratio of not more than 50 mol%.

The insulating film to be used in the insulating coating material of Reference Embodiment 3 preferably has (i) a tensile stress at 5% strain of not less than 180 MPa, (ii) a tensile stress at 15% strain of not less than 225 MPa, and (iii) physical properties of "high yield strength" and "being unlikely to plastically deform". As described in Embodiment 1 above, it is possible to obtain an insulating coating material having an excellent abrasion resistance by using the insulating film having the physical properties of "high yield strength" and "being unlikely to plastically deform".

That is, in a case where a tensile modulus of the polyimide film to be used as the insulating film is measured according to ASTM D882, it is preferable that the tensile stress at 5% strain be not less than 180 MPa, a tensile stress at 10% strain be not less than 210 MPa, and the tensile stress at 15% strain be not less than 225 MPa.

The insulating coating material of Reference Embodiment 3 is demonstrated in Examples 5 through 11 and Comparative Examples 3 through 7 (later described). Note that abrasion resistance is not directly evaluated in Examples 7 through 11 and Comparative Examples 6 and 7. However, as has been described, since it is found that the abrasion resistance correlates with tensile stress at 5% strain and tensile stress at 15% strain, the abrasion resistance is evaluated with use of the tensile stress at 5% strain and the tensile stress at 15% strain as indicators. If necessary, the abrasion resistance may be further evaluated with use of tensile stress at 10% strain, tensile stress at 20% strain, and tensile stress at 25% strain. Just to be sure, the following is additionally described. That is, the inventors of the present invention recognize (i) a case where modulus of elasticity and abrasion resistance do not correlate with each other (see Comparative Example 2) and (ii) a case where breaking strength and abrasion resistance do not correlate with each other (see Comparative Example 3).

The following can be described as examples of preferable aspects of the polyimide film usable in the insulating coating material of Reference Embodiment 3.

The polyimide film preferably contains 55 mol% to 100 mol% BPDA as a dianhydride component and 75 mol% to 100 mol% PDA as a diamine component, more preferably contains 75 mol% to 100 mol% BPDA as the dianhydride component and 80 mol% to 100 mol% PDA as the diamine component, and still more preferably contains 80 mol% to 100 mol% BPDA as the dianhydride component and 90 mol% to 100 mol% PDA as the diamine component.

The polyimide film contains BTDA preferably at a ratio of not more than 50 mol%, more preferably at a ratio of not more than 40 mol%, still more preferably at a ratio of not more than 30 mol%, and further still more preferably at a ratio of not more than 20 mol%.

That is, Reference Embodiment 3, needless to say, includes a polyimide film where BPDA/PDA = 100/100, and also includes a polyimide film containing BTDA at a ratio of approximately 15 mol%. Moreover, just to be sure, the following is additionally described. That is, in view of the above matter, Reference Embodiment 3 also includes a polyimide film to be modified within a range of ordinary creativity of a person skilled in the art.

The total number of moles of BPDA, PMDA and PDA of the polyimide film is preferably not less than 150 mol%, more preferably not less than 170 mol%, and still more preferably not less than 180 mol%.

The polyimide film contains, as a dianhydride component, preferably 0 mol% to 45 mol% PMDA, more preferably 0 mol% to 35 mol% PMDA, and still more preferably 0 mol% to 25 mol% PMDA. In other words, the polyimide film contains, as the dianhydride component, preferably not more than 45 mol% PMDA, more preferably not more than 35 mol% PMDA, and still more preferably not more than 25 mol% PMDA.

The polyimide film contains, as a diamine component, preferably 0 mol% to 35 mol% ODA, more preferably 0 mol% to 20 mol% ODA, and still more preferably 0 mol% to 15 mol% ODA. In other words, the polyimide film contains, as the diamine component, preferably not more than 35 mol% ODA, more preferably not more than 20 mol% ODA, and still more preferably not more than 15 mol% ODA.

The polyimide film having the above composition preferably has (i) a tensile stress at 5% strain of not less than 180 MPa and a tensile stress at 15% strain of not less than 225 MPa, and (ii) properties of "high yield strength" and "being unlikely to plastically deform". This polyimide film is preferable because, in a case where this polyimide film is used as an insulating film of an insulating coating material, this polyimide film exerts an excellent abrasion resistance.

[Embodiment 4]

Embodiment 4 of the insulating coating material of the present invention will be described. Note that, similar to Reference Embodiments 2 and 3, (i) Embodiment 4 describes only part different from Embodiment 1, (ii) matters which Embodiment 4 does not particularly describe are considered to be common to those which Embodiment 1 describes, and (iii) the matters which Embodiment 1 describes are cited in Embodiment 4.

A method of producing an insulating coating material of Embodiment 4 is a method of producing an insulating coating material that includes (i) an insulating film made from a polyimide resin and (ii) an adhesive layer made from a fluorocarbon resin, the insulating film being a polyimide film obtained by imidizing a polyamic acid which is obtained by reacting a diamine component and a dianhydride component,

the polyamic acid being obtained by a production method including the steps of:

(A) reacting the dianhydride component and the diamine component in an organic polar solvent in a state where either the dianhydride component or the diamine component has excessive moles, so as to obtain a prepolymer having amino groups or dianhydride groups at both terminals; and
(B) synthesizing the polyamic acid with use of (i) the prepolymer obtained in the step (A) and (ii) a dianhydride component and (iii) a diamine component equal in molar quantity to one another in all steps,

the method including the step of:

forming the adhesive layer for the insulating film,
in a case where a total number of moles of the dianhydride component and the diamine component which are used in the step (A) is 100 mol%, an ether amount represented below is not less than 35.0 mol% and not more than 70.0 mol%, the ether amount being a sum total mol% of an oxygen atom derived from an ether bond included by the dianhydride component and the diamine component which are used in the step (A).

That is, "ether amount" in this specification is a sum total mol% of an oxygen atom derived from an ether bond included by the dianhydride component and the diamine component which are used in the step (A) in a case where a total number of moles of the dianhydride component and the diamine component which are used in the step (A) is 100 mol%. The following describes, for example, a case of Example 12 (Synthesis Example 16). In this case, the dianhydride component and the diamine component which are used in the step (A) are 26.3 mol% BTDA, 42.1 mol% ODA, 21.0 mol% BPDA, and 10.5 mol% BAPP. Though the BTDA and the BPDA which are the dianhydride component do not include any ether bond, a repeating unit of the BAPP that is the diamine component includes two ether bonds, and a repeating unit of the ODA includes one ether bond. Note that one oxygen atom is derived from one ether bond in a repeating unit. Therefore, an ether amount in the step (A) is calculated to be $(26.3 \times 0) + (42.1 \times 1) + (21.0 \times 0) + (10.5 \times 2) = 63.1$ (mol%).

The ether amount is preferably not less than 35.0 mol% and not more than 70.0 mol%, more preferably not less than 40.0 mol% and not more than 70.0 mol%, and still more preferably not less than 45.0 mol% and not more than 65.0 mol%. In a case where the ether amount is within the above range, it is possible to obtain an insulating coating material having an excellent abrasion resistance.

It is preferable in the step (B) of the method of producing the insulating coating material of Embodiment 4 that PDA and PMDA account for not less than 70 mol% with respect to 100 mol% in total of the dianhydride component and the diamine component which are used in the step (B). The prepolymer formed in the step (A) is obtained through (i) a step of forming, with use of a diamine component (a) and a dianhydride component (b) that has fewer moles than the diamine component (a), the prepolymer having the diamine component at a terminal group or (ii) a step of forming, with use of a diamine component (a) and a dianhydride component (b) that has excessive moles than the diamine component (a), the prepolymer having the dianhydride component at a terminal group, and it is preferable that

when (a) < (b), 0.81 < (a)/(b) < 0.99 be satisfied, and
when (a) > (b), 0.81 < (b)/(a) < 0.99 be satisfied.

It is more preferable that

when (a) < (b), 0.82 < (a)/(b) < 0.99 is satisfied, and
when (a) > (b), 0.82 < (b)/(a) < 0.99 is satisfied.

The "(a)/(b)" or "(b)/(a)" reflects a repeating unit n of the prepolymer. That is, the repeating unit n can be controlled at a feed ratio of the "(a)/(b)" or "(b)/(a)". Though the repeating unit n can be affected by stirring efficiency etc., Embodiment 4 ignores the affection, and uses the repeating unit n which is theoretically derived from a molar ratio of the "(a)/(b)" or "(b)/(a)". Note that the repeating unit n of the prepolymer is preferably 3 to 99, more preferably 4 to 99, still more preferably 4.1 to 99, and particularly preferably 4.5 to 99. In a case where the repeating unit n of the prepolymer is within this range, a desired property is easily generated.

The insulating film to be used in the insulating coating material of Embodiment 4 preferably has (i) a tensile stress at 5% strain of not less than 180 MPa and a tensile stress at 15% strain of not less than 225 MPa, and (ii) properties of "high yield strength" and "being unlikely to plastically deform". As described in Embodiment 1 above, it is possible to obtain an insulating coating material having an excellent abrasion resistance by using the insulating film having the properties of "high yield strength" and "being unlikely to plastically deform".

That is, in a case where a tensile modulus of the polyimide film to be used as the insulating film is measured according to ASTM D882, it is preferable that the tensile stress at 5% strain be not less than 180 MPa, a tensile stress at 10% strain be not less than 210 MPa, and the tensile stress at 15% strain be not less than 225 MPa.

The insulating coating material of Embodiment 4 is demonstrated in Examples 1 through 4, Examples 12 through 26, and Comparative Examples 1, 2, and 8 through 12 (later described). Note that abrasion resistance is not directly evaluated in Examples 12 through 26 and Comparative Examples 8 through 12. However, as has been described, since it is found that the abrasion resistance correlates with tensile stress at 5% strain and tensile stress at 15% strain, the abrasion resistance is evaluated with use of the tensile stress at 5% strain and the tensile stress at 15% strain as indicators. If necessary, the abrasion resistance may be further evaluated with use of tensile stress at 10% strain, tensile stress at 20% strain, and tensile stress at 25% strain.

A production method for obtaining the polyimide film of Embodiment 4 includes, for example, the steps of:

(i) forming, in an organic polar solvent, a prepolymer having an amino group at an terminal, with use of a diamine component (a) and a dianhydride component (b) that has fewer moles than the diamine component (a);
(ii) synthesizing a polyimide precursor solution with use of the prepolymer obtained in the step (i), and an acid anhydride component and a diamine component equal in molar quantity to one another in all steps; and
(iii) flow-casting a film-forming dope liquid that includes the polyimide precursor solution, and carrying out chemical and/or thermal imidization. As long as the production method includes these three steps (i) through (iii), any other various methods can be used in combination.
Another production method for obtaining the polyimide film of Embodiment 4 may include the steps of:
(iv) forming, in an organic polar solvent, a prepolymer having an acid anhydride group at an terminal, with use of a diamine component (a) and a dianhydride component (b) that has excessive moles than the diamine component (a);
(v) synthesizing a non-thermoplastic polyimide precursor solution with use of the prepolymer obtained in the step (iv), and an acid anhydride component and a diamine component equal in molar quantity to one another in all steps; and
(vi) flow-casting a film-forming dope liquid that includes the non-thermoplastic polyimide precursor solution, and carrying out chemical and/or thermal imidization.

The following description will discuss step (A) and step (B) in detail.

<Step (A)>

In the step (A), a prepolymer having an amino group at a terminal is formed in an organic polar solvent with use of a diamine component (a) and a dianhydride component (b) that has fewer moles than the diamine component (a). Alternatively, a prepolymer having an acid anhydride group at a terminal is formed with use of a diamine component (a) and a dianhydride component (b) that has excessive moles than the diamine component (a). Note here that it is preferable to select the diamine component (a) and the acid anhydride component (b) so that a polyimide obtained by reacting the diamine component (a) and the acid anhydride component (b) equal in molar quantity to each other has a flexible chemical structure.

The "flexible chemical structure" means a chemical structure showing flexibility at high temperature. Specifically, a prepolymer derived from a polyimide that shows flexibility at high temperature can be defined that a storage modulus of elasticity of a polymeric film of the prepolymer reaches not more than 50 MPa at 300°C to 450°C when the storage modulus of elasticity is measured with a dynamic viscoelastic behavior measurement apparatus (DMA). It is more preferable that, in a case where behavior of the storage modulus of elasticity is shown by a chart, an inflection point exist in a range from 250°C to 350°C. In a case where the prepolymer formed in the step (A) is flexible at high temperature, it is possible to stably produce an insulating film having an excellent abrasion resistance that is the effect of the present invention. On the other hand, in a case where the prepolymer formed in the step (A) is flexible at a temperature lower than the above temperature range, tensile stress at x% strain sometimes decreases.

Specifically, the diamine component (a) and the acid anhydride component (b) are selected by checking whether or not the polyimide obtained by reacting the diamine component (a) and the acid anhydride component (b) equal in molar quantity to each other shows the behavior of the storage modulus of elasticity. The selected diamine component (a) and acid anhydride component (b) that has fewer moles than the diamine component (a) are reacted in the organic polar solvent so that the prepolymer having the amino group at the terminal is formed. Alternatively, the diamine component (a) and the acid anhydride component (b) that has excessive moles than the diamine component (a) are reacted in the organic polar solvent so that the prepolymer having the acid anhydride group at the terminal is formed. The obtained prepolymer is a polyimide block component showing flexibility at high temperature.

In Embodiment 4, the ratio of a prepolymer component is calculated according to (i) mathematical expression (1) in a case where synthesis is carried out with use of a diamine that has excessive moles than an acid component or (ii) mathematical expression (2) in a case where synthesis is carried out with use of an acid component that has excessive moles than a diamine component.

$$\mathrm{(Prepolymer\ content)} = a/P \times 100 \cdots (1)$$

a: amount of diamine component (a) (mol)
P: total amount of diamine (mol)

$$\mathrm{(Prepolymer\ content)} = b/Q \times 100 \cdots (2)$$

b: amount of acid anhydride component (b) (mol)
Q: total amount of acid component (mol)

In particular, in the step (A), the dianhydride component preferably includes at least one compound selected from the group consisting of 3,3',4,4'-benzophenone tetracarboxylic dianhydride (BTDA) and 3,3',4,4'-biphenyl tetracarboxylic dianhydride (BPDA).

<Step (B)>

In the step (B), a polyamic acid (polyimide precursor) is synthesized with use of (i) the prepolymer obtained in the step (A), (ii) an acid anhydride component, and (iii) a diamine component. It is preferable to select the acid anhydride component and the diamine component so that a polyimide corresponding to a polyimide precursor solution obtained in the step (B) is a non-thermoplastic polyimide. Whether or not the polyimide is the non-thermoplastic polyimide can be checked by determining an appearance of a film which has been fixed to a metal frame and then subjected to a heat treatment at 450°C for one minute. It is determined that the polyimide is the non-thermoplastic polyimide in a case where the film is neither melted nor wrinkled, and keeps the appearance. In the step (B), the polyimide precursor is allowed to be obtained through a step including two or more stages, provided that the prepolymer obtained in the step (A), the acid anhydride component and the diamine component are used in equal molar quantity.

A polyamic acid solution obtained in this manner usually has a concentration of 5 wt% to 35 wt%, and preferably has a concentration of 10 wt% to 30 wt%. The polyamic acid solution having this concentration range obtains suitable molecular weight and solution viscosity.

The following describes preferable examples of diamine and dianhydride which are used to be reacted with a prepolymer so that a non-thermoplastic polyimide precursor is produced in Embodiment 4. Various properties change depending on a combination of the diamine and the dianhydride. It is therefore not possible to undoubtedly define the diamine and the dianhydride. However, it is preferable to use a rigid component as the diamine, for example, use p-phenylenediamine and a derivative thereof or benzidine and a derivative thereof as a main component. Use of the diamine having a rigid structure makes it easy to achieve non-thermoplasticity and a high modulus of elasticity. Examples of an acid component include pyromellitic dianhydride, 2,3,7,8-naphthalene tetracarboxylic dianhydride, and the like. It is preferable to use the pyromellitic dianhydride as a main component. The pyromellitic dianhydride tends to easily become a non-thermoplastic polyimide thanks to rigidity of a structure of the pyromellitic dianhydride, which is well-known.

In Embodiment 4, it is preferable in terms of ease of polymerization control and convenience of an apparatus to use a polymerization method in which a prepolymer is synthesized, and then diamine and dianhydride are added at an appropriately-designed molar fraction so that a non-thermoplastic polyimide precursor is obtained.

Any solvent can be used as a preferable one, provided that the solvent dissolves polyamic acid. Examples of the preferable solvent include amide solvents, i.e., N,N-dimethylformamide, N,N-dimethylacetamide, N-methyl-2-pyrolidone, and the like. Among these, N,N-dimethylformamide and N,N-dimethylacetamide are particularly preferably usable.

The following examples can be described as preferable aspects of the polyimide film usable in the insulating coating material of Embodiment 4.

It is preferable that (i) the polyimide film contain BTDA as a dianhydride component and (ii) the total amount of the BTDA account for 10 mol% to 55 mol% of the dianhydride component.

It is preferable that (i) the polyimide film essentially contain PMDA as a dianhydride component, and contain BPDA as an optional component and (ii) the total amount of the PMDA and the BPDA account for not more than 45 mol% to 84 mol% of all dianhydride components. Since the BPDA is the optional component, the BPDA is not sometimes mixed. In a case where the BPDA is not mixed, for example, the PMDA accounts for not more than 45 mol% to 84 mol% of the all dianhydride components.

In order to increase tear strength of a low-temperature baking film, a solid concentration of the polyamic acid solution is preferably not more than 16.5%.

It is preferable in the step (A) that a dianhydride component and/or a diamine component which include(s) an ether bond account(s) for not more than 45 mol% to 65 mol% with respect to 100 mol% in total of a dianhydride component and a diamine component which are to be used.

It is preferable in the step (A) that (i) when (a) < (b), 0.83 < (a)/(b) <0.95 is satisfied, and (ii) when (a) > (b), 0.83 < (b)/(a) < 0.99 is satisfied. It is more preferable in the step (A) that (i) when (a) < (b), 0.86 < (a)/(b) < 0.95 is satisfied, and (ii) when (a) > (b), 0.85 < (b)/(a) < 0.99 is satisfied.

It is preferable in the step (B) that PDA and PMDA account for not less than 75 mol% with respect to 100 mol% in total of the dianhydride component and the diamine component which are used in the step (B).

It is preferable that BTDA accounts for not more than 17 mol% to 52 mol% of all dianhydride components of the polyimide film.

It is preferable that the total amount of the PMDA and BPDA account for not more than 48 mol% to 78 mol% of all dianhydride components of the polyimide film.

It is preferable that a solid concentration of the polyamic acid solution be not more than 16.0%.

A prepolymer component formed in the step (A) accounts for preferably 20 mol% to 65 mol%, more preferably 30 mol% to 60 mol%, and particularly preferably 35 mol% to 55 mol% of the polyimide film.

In a case where the polyimide film is continuously produced at a film tear strength which is low during baking, a trouble easily occurs, for example, a film tears. Such a low film tear strength is not suitable for continuous production. Therefore, the film tear strength, during baking, which is measured according to JIS K7128-1 trouser tear method is preferably not less than 0.95 N/mm. Note that a film during the baking is obtained as follows. That is, a polyamic acid solution is flow-cast and applied onto aluminum foil with use of a comma coater, an obtained resin film is heated at 110°C for 90 seconds, a gel film having a self-supporting property is removed from the aluminum foil, and then the gel film is fixed to a metal frame and heated at 250°C for 15 seconds, so that the film (thickness: 17 $\mu$ to 22 $\mu$) is obtained. The film is evaluated.

The film tear strength, during baking, which is measured according to JIS K7128-1 trouser tear method is still more preferably not less than 1.3 N/mm, and particularly preferably not less than 1.5 N/mm.

The polyimide film of the aforementioned aspects preferably has (i) a tensile stress at 5% strain of not less than 180 MPa and a tensile stress at 15% strain of not less than 225 MPa, and (ii) properties of "high yield strength" and "being unlikely to plastically deform". This polyimide film is preferable because, in a case where this polyimide film is used as an insulating film of an insulating coating material, this polyimide film exerts an excellent abrasion resistance.

The present invention can encompass a method of producing an insulating cable, the method including the steps of: carrying out a method of producing the insulating coating material; and winding, around an electric conductor, the insulating coating material obtained by the method of producing the insulating coating material.

Examples

(Mechanical property: measurement of tensile stress at x% strain)

A tensile stress at x% strain is found from measurement data of a tensile modulus. The tensile modulus was measured according to ASTM D882 with use of an AUTOGRAPH AGS-J manufactured by Shimadzu Corporation (sample measurement range: 15 mm in width, distance between grippers: 100 mm, and tensile speed: 200 mm/min).
(Mechanical property: tear strength during low-temperature baking)
A tear strength during low-temperature baking was measured according to JIS K7128-1 trouser tear method. A film which was being baked was used to evaluate the tear strength during low-temperature baking. As the film which was being baked used was a film obtained as follows. A polyamic acid solution was flow-cast and applied onto aluminum foil with use of a comma coater, an obtained resin film was heated at 110°C for 90 seconds and removed from the aluminum foil, a gel film having a self-supporting property was obtained, and then the gel film was fixed to a metal frame and heated at 250°C for 15 seconds, so that the film (thickness: 17 μm to 22 μm) was obtained.

(Wire property: measurement of wire to be evaluated)

A polyimide film to be evaluated, an FEP film (12 pm), a conducting wire whose diameter was 1 mm, an FEP film (12 pm), and a polyimide film to be evaluated were stacked in this order, so that a laminated material was obtained. Then, a stainless steel plate, a KINYO BOARD (manufactured by KINYOSHA CO., LTD.), the laminated material, a KINYO BOARD (manufactured by KINYOSHA CO., LTD.), and a stainless steel plate were stacked in this order, and then subjected to a pressure of 78 kgf/cm$^2$ at 280°C for 10 minutes, so that a wire to be evaluated was obtained. Thereafter, abrasion resistance of the wire to be evaluated was measured according to British Standard Aerospace Series BS EN3475-503. This measurement was carried out five times. An average of the five measurements was found as the abrasion resistance. The abrasion resistance of the wire to be evaluated was measured with use of a REPEATED SCRAPE ABRASION TESTER (CAT 158L238G1) manufactured by Wellman Thermal Systems Corporation. As the conducting wire used was a High performance conductor Nickel coated copper (AWG: 20, CONST: 19/32) manufactured by Phelps dodge Corporation. Note that the measurements were carried out under the condition where the polyimide film had a uniform thickness of 50 μm, in order to prevent erroneous judgment due to variation in thickness when results of the abrasion resistance were judged.
The polyimide film was produced from a polyimide precursor according to the following method unless otherwise specified in Example.

(Method of producing polyimide whose thickness is 12 μm to 13 μm)

To a polyimide precursor (90 g) added was 40.5 g of a curing agent consisting of acetic anhydride, isoquinoline and DMF. A mixture thereof was stirred and defoamed at 0°C or lower, and flow-cast and applied onto aluminum foil with use of a comma coater. An obtained resin film was heated at 120°C for 100 seconds. Thereafter, a gel film having a self-supporting property was removed from the aluminum foil, fixed to a metal frame, and dried at 250°C for 15 seconds, at 350°C for 15 seconds, and at 450°C for 100 seconds to be imidized, so that a polyimide film whose thickness was 12 μm to 13 μm was obtained.

(Method of producing polyimide whose thickness is 15 μm to 21 μm)

To a polyimide precursor (90 g) added was 40.5 g of a curing agent consisting of acetic anhydride, isoquinoline and DMF. A mixture thereof was stirred and defoamed at 0°C or lower, and flow-cast and applied onto aluminum foil with use of a comma coater. An obtained resin film was heated at 120°C for 110 seconds. Thereafter, a gel film having a self-supporting property was removed from the aluminum foil, fixed to a metal frame, and dried at 250°C for 15 seconds, at 350°C for 15 seconds, and at 450°C for 120 seconds to be imidized, so that a polyimide film whose thickness was 15 μm to 21 μm was obtained.

(Method of producing polyimide whose thickness is 24 μm to 26 μm)

To a polyimide precursor (90 g) added was 40.5 g of a curing agent consisting of acetic anhydride, isoquinoline and DMF. A mixture thereof was stirred and defoamed at 0°C or lower, and flow-cast and applied onto aluminum foil with use of a comma coater. An obtained resin film was heated at 110°C for 150 seconds. Thereafter, a gel film having a self-supporting property was removed from the aluminum foil, fixed to a metal frame, and dried at 250°C for 20 seconds, at 350°C for 20 seconds, and at 450°C for 120 seconds to be imidized, so that a polyimide film whose thickness was

24 $\mu$m to 26 $\mu$m was obtained.

(Method of producing polyimide whose thickness is 49 $\mu$m to 51 $\mu$m)

To a polyimide precursor (90 g) added was 40.5 g of a curing agent consisting of acetic anhydride, isoquinoline and DMF. A mixture thereof was stirred and defoamed at 0°C or lower, and flow-cast and applied onto aluminum foil with use of a comma coater. An obtained resin film was heated at 90°C for 300 seconds. Thereafter, a gel film having a self-supporting property was removed from the aluminum foil, fixed to a metal frame, and dried at 150°C for 60 seconds at 250°C for 60 seconds, at 350°C for 60 seconds, and at 450°C for 150 seconds to be imidized, so that a polyimide film whose thickness was 49 pm to 51 pm was obtained.

(Synthesis Example 1: Synthesis of polyimide precursor 1)

To a glass flask whose volume was 2000 ml introduced was 655.9 g of DMF. Then, 46.1 g (143.1 mmol) of 3,3',4,4'-benzophenone tetracarboxylic dianhydride (BTDA) and 25.8 g (128.8 mmol) of 4,4'-oxydianiline (ODA) were added to the glass flask and stirred for one hour to dissolve, to which 17.0 g (157.2 mmol) of p-phenylenediamine (PDA) and 29.3 g (134.3 mmol) of pyromellitic dianhydride (PMDA) were then added and stirred for one hour to dissolve, so that a reaction liquid was obtained. To the reaction liquid gradually added was a separately adjusted DMF solution (8 wt%) of PMDA. The addition of the DMF solution was stopped when viscosity at 23°C reached 2500 poises. Consequently, a polyimide precursor 1 was obtained.
Tables 1 and 3 show mol% of each dianhydride component and each diamine component which were used in all steps.
In a case where the total number of moles of a dianhydride component and a diamine component which are used in the step (A) is 100 mol%, dianhydride and diamine which are used in the step (A) are 52.6 mol% BTDA and 47.4 mol% ODA. Therefore, ether amount is (47.4 $\times$ 1) + (52.6 $\times$ 0) = 47.4 mol%.

(Synthesis Example 2: Synthesis of polyimide precursor 2)

To a glass flask whose volume was 2000 ml introduced was 655.9 g of DMF. Then, 28.7 g (143.3 mmol) of ODA and 41.5 g (128.8 mmol) of BTDA were added to the glass flask and stirred for one hour to dissolve, to which 15.5 g (143.3 mmol) of PDA and 32.5 g (149.0 mmol) of PMDA were then added and stirred for one hour to dissolve, so that a reaction liquid was obtained. To the reaction liquid gradually added was a separately adjusted DMF solution (8 wt%) of PMDA. The addition of the DMF solution was stopped when viscosity at 23°C reached 2500 poises. Consequently, a polyimide precursor 2 was obtained.
Tables 1 and 3 show mol% of each dianhydride component and each diamine component which were used in all steps.
In a case where the total number of moles of a dianhydride component and a diamine component which are used in the step (A) is 100 mol%, an ether amount is calculated in the same manner as Synthesis Example 1 to be 52.7 mol%.

(Synthesis Example 3: Synthesis of polyimide precursor 3)

To a glass flask whose volume was 2000 ml introduced was 655.5 g of DMF. Then, 29.1 g (145.3 mmol) of ODA, 17.1 g (58.1 mmol) of 3,3',4,4'-biphenyl tetracarboxylic dianhydride (BPDA), and 23.4 g (72.6 mmol) of BTDA were added to the glass flask and stirred for one hour to dissolve, to which 15.7 g (145.2 mmol) of PDA and 32.9 g (150.8 mmol) of PMDA were then added and stirred for one hour to dissolve, so that a reaction liquid was obtained. To the reaction liquid gradually added was a separately adjusted DMF solution (8 wt%) of PMDA. The addition of the DMF solution was stopped when viscosity at 23°C reached 2500 poises. Consequently, a polyimide precursor 3 was obtained.
Tables 1 and 3 show mol% of each dianhydride component and each diamine component which were used in all steps.
In a case where the total number of moles of a dianhydride component and a diamine component which are used in the step (A) is 100 mol%, an ether amount is calculated in the same manner as Synthesis Example 1 to be 52.6 mol%.

(Synthesis Example 4: Synthesis of polyimide precursor 4)

To a glass flask whose volume was 2000 ml introduced was 655.9 g of DMF. Then, 29.2 g (145.8 mmol) of ODA, 17.2 g (58.5 mmol) of BPDA, and 21.6 g (67.0 mmol) of BTDA were added to the glass flask and stirred for one hour to dissolve, to which 15.8 g (146.1 mmol) of PDA and 34.4 g (157.7 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 4 was obtained.

Tables 1 and 3 show mol% of each dianhydride component and each diamine component which were used in all steps.

In a case where the total number of moles of a dianhydride component and a diamine component which are used in the step (A) is 100 mol%, an ether amount is calculated in the same manner as Synthesis Example 1 to be 53.7 mol%.

(Synthesis Example 5: Synthesis of polyimide precursor 5)

To a glass flask whose volume was 2000 ml introduced was 667.9 g of DMF. Then, 84.3 g (286.5 mmol) of BPDA, 8.7 g (43.4 mmol) of ODA, and 25.6 g (236.7 mmol) of PDA were added to the glass flask and stirred for one hour to dissolve, so that a reaction liquid was obtained. To the reaction liquid gradually added was a separately adjusted DMF solution (7 wt%) of PDA. The addition of the DMF solution was stopped when viscosity reached 2500 poises. Consequently, a polyimide precursor 5 was obtained.

Tables 1 and 2 show mol% of each dianhydride component and each diamine component which were used in all steps.

(Synthesis Example 6: Synthesis of polyimide precursor 6)

To a glass flask whose volume was 2000 ml introduced was 709.3 g of DMF. Then, 93.2 g (316.8 mmol) of BPDA and 33.2 g (307.0 mmol) of PDA were added to the glass flask and stirred for one hour to dissolve, so that a reaction liquid was obtained. To the reaction liquid gradually added was a separately adjusted DMF solution (7 wt%) of PDA. The addition of the DMF solution was stopped when viscosity reached 2500 poises. Consequently, a polyimide precursor 6 was obtained.

Tables 1 and 2 show mol% of each dianhydride component and each diamine component which were used in all steps.

(Synthesis Example 7: Synthesis of polyimide precursor 7)

To a glass flask whose volume was 2000 ml introduced was 655.5 g of DMF. Then, 29.1 g (145.3 mmol) of ODA, 15.7 g (145.2 mmol) of PDA, 17.1 g (58.1 mmol) of BPDA, 23.4 g (72.6 mmol) of BTDA, and 32.9 g (150.8 mmol) of PMDA were added to the glass flask and stirred for one hour to dissolve, so that a reaction liquid was obtained. To the reaction liquid gradually added was a separately adjusted DMF solution (8 wt%) of PMDA. The addition of the DMF solution was stopped when viscosity at 23°C reached 2500 poises. Consequently, a polyimide precursor 7 was obtained.

Tables 1 and 3 show mol% of each dianhydride component and each diamine component which were used in all steps.

(Synthesis Example 8: Synthesis of polyimide precursor 8)

To a glass flask whose volume was 2000 ml introduced was 637.6 g of DMF. Then, 36.7 g (89.4 mmol) of BAPP, 11.9 g (59.4 mmol) of ODA, 19.2 g (59.6 mmol) of BTDA, and 16.3 g (74.7 mmol) of PMDA were added to the glass flask and stirred for one hour to dissolve, to which 16.1 g (148.9 mmol) of PDA and 33.8 g (155.0 mmol) of PMDA were then added and stirred for one hour to dissolve, so that a reaction liquid was obtained. To the reaction liquid gradually added was a separately adjusted DMF solution (8 wt%) of PMDA. The addition of the DMF solution was stopped when viscosity at 23°C reached 2500 poises. Consequently, a polyimide precursor 8 was obtained.

Tables 1 and 3 show mol% of each dianhydride component and each diamine component which were used in all steps.

In a case where the total number of moles of a dianhydride component and a diamine component which are used in the step (A) is 100 mol%, an ether amount is calculated in the same manner as Synthesis Example 1 to be 84.1 mol%.

[Example 1]

A polyimide film whose thickness was 19 μm was obtained from the polyimide precursor 1 (90 g) obtained in Synthesis Example 1. Separately from the polyimide film, a polyimide film whose thickness was 50 μm was obtained

from the polyimide precursor 1 (90 g) obtained in Synthesis Example 1. A tensile stress at x% strain was measured with use of the polyimide film whose thickness was 19 $\mu$m. The polyimide film whose thickness was 50 $\mu$m was processed to be a wire to be evaluated, and abrasion resistance was measured. Table 1 shows results. A modulus of elasticity was 8.9 GPa.

[Example 2]

Polyimide films were obtained in the same manner as Example 1 except that the polyimide precursor 2 obtained in Synthesis Example 2 was used. A tensile stress at x% strain was measured with use of a polyimide film whose thickness was 17 $\mu$m of the obtained polyimide films. A polyimide film whose thickness was 50 $\mu$m was processed to be a wire to be evaluated, and abrasion resistance was measured. Table 1 shows results. Note that the polyimide film whose thickness was 17 $\mu$m was processed to a wire to be evaluated, and abrasion resistance was measured to be 4.0 times. A modulus of elasticity was 8.4 GPa.

[Example 3]

Polyimide films were obtained in the same manner as Example 1 except that the polyimide precursor 3 obtained in Synthesis Example 3 was used. A tensile stress at x% strain was measured with use of a polyimide film whose thickness was 16 $\mu$m of the obtained polyimide films. A polyimide film whose thickness was 50 $\mu$m was processed to be a wire to be evaluated, and abrasion resistance was measured. Table 1 shows results. Note that the polyimide film whose thickness was 16 $\mu$m was processed to a wire to be evaluated, and abrasion resistance was measured to be 3.8 times. A modulus of elasticity was 8.7 GPa.

[Example 4]

Polyimide films were obtained in the same manner as Example 1 except that the polyimide precursor 4 obtained in Synthesis Example 4 was used. A tensile stress at x% strain was measured with use of a polyimide film whose thickness was 19 $\mu$m of the obtained polyimide films. A polyimide film whose thickness was 50 $\mu$m was processed to be a wire to be evaluated, and abrasion resistance was measured. Table 1 shows results. A modulus of elasticity was 8.09 GPa (8.1 GPa in a case where a significant figure after a decimal point is one digit).

[Example 5]

Polyimide films whose thicknesses were 12.5 $\mu$m, 16 $\mu$m, 25 $\mu$m, and 50 $\mu$m, respectively, were obtained with use of (i) the polyimide precursor 5 obtained in Synthesis Example 5 and (ii) a curing agent consisting of acetic anhydride, isoquinoline and DMF (whose weight ratio is 17.23:5.75:17.52). A tensile stress at x% strain was measured with use of the polyimide film whose thickness was 16 $\mu$m. The polyimide film whose thickness was 12.5 $\mu$m, the polyimide film whose thickness was 25 $\mu$m, and the polyimide film whose thickness was 50 $\mu$m were processed to be wires to be evaluated, and abrasion resistances were measured. Table 1 shows results. A modulus of elasticity was 10.3 GPa.

[Example 6]

Polyimide films whose thicknesses were 12.5 $\mu$m, 17 $\mu$m, 25 $\mu$m, and 50 $\mu$m, respectively, were obtained with use of (i) the polyimide precursor 6 obtained in Synthesis Example 6 and (ii) a curing agent identical to that of Example 5. A tensile stress at x% strain was measured with use of the polyimide film whose thickness was 17 $\mu$m. The polyimide film whose thickness was 12.5 $\mu$m, the polyimide film whose thickness was 25 $\mu$m, and the polyimide film whose thickness was 50 $\mu$m were processed to be wires to be evaluated, and abrasion resistances were measured. Table 1 shows results. A modulus of elasticity was 11.2 GPa.

[Comparative Example 1]

Polyimide films were obtained in the same manner as Example 1 except that the polyimide precursor 7 obtained in Synthesis Example 7 was used. A tensile stress at x% strain was measured with use of a polyimide film whose thickness was 17 $\mu$m of the obtained polyimide films. A polyimide film whose thickness was 50 $\mu$m was processed to be a wire to be evaluated, and abrasion resistance was measured. Table 1 shows results. A modulus of elasticity was 5.8 GPa.

[Comparative Example 2]

Polyimide films were obtained in the same manner as Example 1 except that the polyimide precursor 8 obtained in Synthesis Example 8 was used. A tensile stress at x% strain was measured with use of a polyimide film whose thickness was 17 μm of the obtained polyimide films. A polyimide film whose thickness was 50 μm was processed to be a wire to be evaluated, and abrasion resistance was measured. Table 1 shows results. A modulus of elasticity was 7.0 GPa.

[Comparative Example 3]

A tensile stress at x% strain was measured with use of a commercially available polyimide film (Kapton E manufactured by Dupont) whose thickness was 25 μm. A commercially available polyimide film (Kapton E manufactured by Dupont) whose thickness was 50 μm was processed to a wire to be evaluated, and abrasion resistance was measured. Table 1 shows results. A modulus of elasticity was 6.1 GPa.

[Comparative Example 4]

A tensile stress at x% strain was measured with use of a commercially available polyimide film (Apical NPI manufactured by KANEKA CORPORATION) whose thickness was 25 μm. A commercially available polyimide film (Apical NPI manufactured by KANEKA CORPORATION) whose thickness was 50 μm was processed to a wire to be evaluated, and abrasion resistance was measured. Table 1 shows results. A modulus of elasticity was 4.5 GPa.

[Comparative Example 5]

A tensile stress at x% strain was measured with use of a commercially available polyimide film (Apical AH manufactured by KANEKA CORPORATION) whose thickness was 19 μm. A commercially available polyimide film (Apical AH manufactured by KANEKA CORPORATION) whose thickness was 50 μm was processed to a wire to be evaluated, and abrasion resistance was measured. Table 1 shows results. A modulus of elasticity was 3.2 GPa. Note that the commercially available polyimide film (Apical AH manufactured by KANEKA CORPORATION) whose thickness was 19 μm was processed to a wire to be evaluated, and abrasion resistance was measured to be 1.6 times.

As is clear from Table 1 below, insulating coating materials including the polyimide films of Examples 1 through 6 are excellent in abrasion resistance, as compared to any of Comparative Examples and the currently commercially-available products.

## [Table 1]

| | Kinds of Varnish | Molar ratio | | | | | | | Polymerization pattern |
| | | Diamine | | | | Dianhydride | | | |
| | | BAPP | ODA | PDA | TPE-R | PMDA | BTDA | BPDA | |
| | | % | % | % | % | % | % | % | - |
| Ex. 1 | Synthesis Ex.1 | 0 | 45 | 55 | 0 | 50 | 50 | 0 | Sequence |
| Ex. 2 | Synthesis Ex.2 | 0 | 50 | 50 | 0 | 55 | 45 | 0 | Sequence |
| Ex. 3 | Synthesis Ex.3 | 0 | 50 | 50 | 0 | 55 | 25 | 20 | Sequence |
| Ex. 4 | Synthesis Ex.4 | 0 | 50 | 50 | 0 | 57 | 23 | 20 | Sequence |
| Ex. 5 | Synthesis Ex.5 | 0 | 15 | 85 | 0 | 0 | 0 | 100 | Random |
| Ex. 6 | Synthesis Ex.6 | 0 | 0 | 100 | 0 | 0 | 0 | 100 | Random |
| Comp.Ex. 1 | Synthesis Ex.7 | 0 | 50 | 50 | 0 | 55 | 25 | 20 | Random |
| Comp.Ex. 2 | Synthesis Ex.8 | 30 | 20 | 50 | 0 | 80 | 20 | 0 | Sequence |
| Comp.Ex. 3 | Kapton E | - | - | - | - | - | - | - | - |
| Comp.Ex. 4 | Apical NPI | - | - | - | - | - | - | - | - |
| Comp.Ex. 5 | Apical AH | - | - | - | - | - | - | - | - |

Table 1 continues as below.

| | Mechanical property | | | | | | | | | Wire property | | | | | |
| | Film thick-ness | M of E | Strain | | | | | | Tear strength during low-temperature baking | 12.5 μ | 16 μ | 17 μ | 19 μ | 25 μ | 50 μ |
| | | | 5% | 10% | 15% | 20% | 25% | Max | | Abrasion resistance | | | | | |
| | Mm | GPa | MPa | MPa | MPa | MPa | MPa | MPa | N/mm | N of T | N of T | N of T | N of T | N of T | N of T |
| Ex. 1 | 19 | 8.9 | 233 | 257 | 266 | 271 | 282 | 286 | 2.22 | - | - | - | - | - | 1225 |
| Ex. 2 | 17 | 8.4 | 229 | 250 | 259 | 269 | 280 | 300 | 2.01 | 1.6 | - | 4.0 | - | 24 | 1110 |
| Ex. 3 | 16 | 8.7 | 222 | 246 | 258 | 268 | 279 | 291 | 1.99 | - | 3.8 | - | - | - | 1163 |
| Ex. 4 | 19 | 8.09 | 214 | 245 | 260 | 270 | 282 | 285 | 2.03 | 1.8 | - | - | - | 28 | 1153 |
| Ex. 5 | 16 | 10.3 | 268 | 295 | 314 | 330 | 340 | 345 | 1.70 | 5 | - | - | - | 41.0 | 6912 |
| Ex. 6 | 17 | 11.2 | 288 | 323 | 343 | 359 | 374 | 382 | 0.45 | - | - | - | - | - | 9033 |
| Comp. Ex. 1 | 17 | 5.8 | 163 | 192 | 205 | 214 | 224 | 240 | 2.08 | - | - | - | - | - | 373 |
| Comp. Ex. 2 | 17 | 7.0 | 176 | 193 | 198 | 202 | 207 | 230 | 2.23 | - | - | - | - | - | 140 |
| Comp. Ex. 3 | 25 | 6.1 | 170 | 198 | 214 | 227 | 241 | 333 | - | 1.2 | - | - | - | 7.4 | 585 |
| Comp. Ex. 4 | 25 | 4.5 | 113 | 152 | 175 | 191 | 201 | 275 | - | 1.1 | - | - | - | 4.8 | 92 |
| Comp. Ex. 5 | 19 | 3.2 | 91 | 122 | 141 | 150 | 156 | 243 | - | 1.0 | - | - | 1.6 | 4.0 | 37 |

"M of E" represents "Modulus of elasticity". "N of T" represents "the number of times".

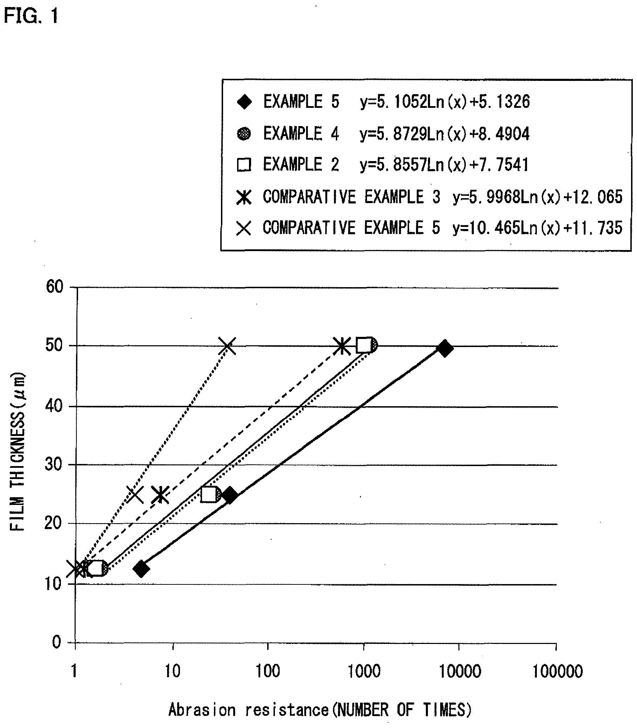

Wires to be evaluated were produced with use of respective polyimide films whose thicknesses are (i) 11.5 μm to 13.5 μm (average thickness: 12.5 pm), (ii) 24.0 μm to 26.0 μm (average thickness: 25.0 μm) and (iii) 48.0 μm to 52.0 μm (average thickness: 50.0 μm) in each of Examples 2, 4 and 5 and Comparative Examples 3 and 5. Abrasion resistances (the number of times) of the wires were measured. Fig. 1 (semi-logarithmic graph) shows results of the measurement.

As is clear from Fig. 1 (semi-logarithmic graph), in order to obtain an abrasion resistance of not less than 10 times, the insulating coating materials of Examples 2, 4 and 5 need only to have a thickness of approximately 22 μm at most, whereas conventional insulating coating materials need to have a thickness of not less than 26 μm. That is, it is found that the insulating coating materials of Examples 2, 4 and 5 which are thinner (lighter in weight) than the conventional insulating coating materials can have an abrasion resistance identical to that of the conventional insulating coating materials. Therefore, according to the present invention, it is possible to provide an insulating coating material which is lightweight and excellent in abrasion resistance.

(Synthesis Example 9: Synthesis of polyimide precursor 9)

To a glass flask whose volume was 2000 ml introduced was 667.7 g of DMF. Then, 73.8 g (250.8 mmol) of BPDA, 14.3 g (44.4 mmol) of BTDA, and 31.0 g (286.7 mmol) of PDA were added to the glass flask and stirred for one hour to dissolve, so that a reaction liquid was obtained. To the reaction liquid gradually added was a separately adjusted DMF solution (7 wt%) of PDA. The addition of the DMF solution was stopped when viscosity reached 2500 poises. Consequently, a polyimide precursor 9 was obtained.

Table 2 shows mol% of each dianhydride component and each diamine component which were used in all steps.

(Synthesis Example 10: Synthesis of polyimide precursor 10)

To a glass flask whose volume was 2000 ml introduced was 668.3 g of DMF. Then, 82.1 g (279.1 mmol) of BPDA, 12.2 g (41.7 mmol) of TPE-R, and 24.7 g (228.4 mmol) of PDA were added to the glass flask and stirred for one hour to dissolve, so that a reaction liquid was obtained. To the reaction liquid gradually added was a separately adjusted DMF solution (7 wt%) of PDA. The addition of the DMF solution was stopped when viscosity reached 2500 poises. Consequently, a polyimide precursor 10 was obtained.

Table 2 shows mol% of each dianhydride component and each diamine component which were used in all steps.

(Synthesis Example 11: Synthesis of polyimide precursor 11)

To a glass flask whose volume was 2000 ml introduced was 668.8 g of DMF. Then, 78.9 g (268.2 mmol) of BPDA, 16.5 g (40.2 mmol) of BAPP, and 23.8 g (220.1 mmol) of PDA were added to the glass flask and stirred for one hour to dissolve, so that a reaction liquid was obtained. To the reaction liquid gradually added was a separately adjusted DMF solution (7 wt%) of PDA. The addition of the DMF solution was stopped when viscosity reached 2500 poises. Consequently, a polyimide precursor 11 was obtained.

Table 2 shows mol% of each dianhydride component and each diamine component which were used in all steps.

(Synthesis Example 12: Synthesis of polyimide precursor 12)

To a glass flask whose volume was 2000 ml introduced was 655.1 g of DMF. Then, 22.3 g (206.2 mmol) of PDA, 38.2 g (129.8 mmol) of BPDA, and 18.0 g (55.9 mmol) of BTDA were added to the glass flask and stirred for one hour to dissolve, to which 17.7 g (88.4 mmol) of ODA and 22.8 g (104.5 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity at 23°C reached 2500 poises. Consequently, a polyimide precursor 12 was obtained.

(Synthesis Example 13: Synthesis of polyimide precursor 13)

To a glass flask whose volume was 2000 ml introduced was 654.9 g of DMF. Then, 22.5 g (208.1 mmol) of PDA, 47.1 g (160.1 mmol) of BPDA, and 8.6 g (26.7 mmol) of BTDA were added to the glass flask and stirred for one hour to dissolve, to which 17.8 g (88.9 mmol) of ODA and 22.9 g (105.0 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity at 23°C reached 2500 poises. Consequently, a polyimide precursor 13 was obtained.

(Synthesis Example 14: Synthesis of polyimide precursor 14)

To a glass flask whose volume was 2000 ml introduced was 634.3 g of DMF. Then, 28.2 g (140.8 mmol) of ODA, 22.9 g (211.8 mmol) of PDA, 31.1 g (105.7 mmol) of BPDA, and 51.5 g (236.1 mmol) of PMDA were added to the glass flask and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 14 was obtained.
Table 2 shows mol% of each dianhydride component and each diamine component which were used in all steps.

(Synthesis Example 15: Synthesis of polyimide precursor 15)

To a glass flask whose volume was 2000 ml introduced was 635.4 g of DMF. Then, 27.2 g (135.8 mmol) of ODA, 22.0 g (203.4 mmol) of PDA, 49.9 g (169.6 mmol) of BPDA, and 34.8 g (159.5 mmol) of PMDA were added to the glass flask and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 15 was obtained.
Table 2 shows mol% of each dianhydride component and each diamine component which were used in all steps.

[Example 7]

A polyimide film whose thickness was 16 $\mu$m to 19 $\mu$m was obtained with use of (i) the polyimide precursor 9 obtained in Synthesis Example 9 and (ii) a curing agent identical to that of Example 5. A tensile stress at x% strain was measured with use of the obtained polyimide film. Table 2 shows results. A modulus of elasticity was 11.4 GPa.

[Example 8]

A polyimide film whose thickness was 16 $\mu$m to 19 $\mu$m was obtained with use of (i) the polyimide precursor 10 obtained in Synthesis Example 10 and (ii) a curing agent identical to that of Example 1. A tensile stress at x% strain was measured with use of the obtained polyimide film. Table 2 shows results. A modulus of elasticity was 9.9 GPa.

[Example 9]

A polyimide film whose thickness was 16 $\mu$m to 19 $\mu$m was obtained with use of (i) the polyimide precursor 11 obtained in Synthesis Example 11 and (ii) a curing agent identical to that of Example 1. A tensile stress at x% strain was measured with use of the obtained polyimide film. Table 2 shows results. A modulus of elasticity was 9.4 GPa.

[Example 10]

A polyimide film whose thickness was 16 $\mu$m to 19 $\mu$m was obtained with use of (i) the polyimide precursor 12 obtained in Synthesis Example 12 and (ii) a curing agent identical to that of Example 1. A tensile stress at x% strain was measured with use of the obtained polyimide film. Table 2 shows results. A modulus of elasticity was 7.7 GPa.

[Example 11]

A polyimide film whose thickness was 16 $\mu$m to 19 $\mu$m was obtained with use of (i) the polyimide precursor 13 obtained in Synthesis Example 13 and (ii) a curing agent identical to that of Example 1. A tensile stress at x% strain was measured with use of the obtained polyimide film. Table 2 shows results. A modulus of elasticity was 7.4 GPa.

[Comparative Example 6]

A polyimide film whose thickness was 16 $\mu$m to 19 $\mu$m was obtained with use of (i) the polyimide precursor 15 obtained in Synthesis Example 15 and (ii) a curing agent identical to that of Example 1. A tensile stress at x% strain was measured with use of the obtained polyimide film. Table 2 shows results. A modulus of elasticity was 6.1 GPa.

[Comparative Example 7]

A polyimide film whose thickness was 16 $\mu$m to 19 $\mu$m was obtained with use of (i) the polyimide precursor 14 obtained in Synthesis Example 14 and (ii) a curing agent identical to that of Example 1. A tensile stress at x% strain was measured with use of the obtained polyimide film. Table 2 shows results. A modulus of elasticity was 6.1 GPa.

Table 2 below shows, for reference, evaluated wire properties (abrasion resistance) of Examples 5 and 6 and Comparative Examples 3 through 5. As is clear from Table 2, the polyimide films of Examples 5 through 11 have favorable tensile stress at 5% strain and tensile stress at 15% strain, and physical properties of "high yield strength" and "being unlikely to plastically deform", as compared to any of Comparative Examples and the currently commercially-available products. Therefore, it is considered that insulating coating materials including the polyimide films of Examples 5 through 11 are excellent in abrasion resistance.

## [Table 2]

| | Kinds of Varnish | Molar ratio | | | | | | | Polymerization pattern |
| | | Diamine | | | | Dianhydride | | | |
| | | BAPP | ODA | PDA | TPE-R | PMDA | BTDA | BPDA | |
| | | % | % | % | % | % | % | % | - |
| Ex. 6 | Synthesis Ex.6 | 0 | 0 | 100 | 0 | 0 | 0 | 100 | Random |
| Ex. 5 | Synthesis Ex.5 | 0 | 15 | 85 | 0 | 0 | 0 | 100 | Random |
| Ex. 7 | Synthesis Ex.9 | 0 | 0 | 100 | 0 | 0 | 15 | 85 | Random |
| Ex. 8 | Synthesis Ex.10 | 0 | 0 | 85 | 15 | 0 | 0 | 100 | Random |
| Ex. 9 | Synthesis Ex.11 | 15 | 0 | 85 | 0 | 0 | 0 | 100 | Random |
| Ex. 10 | Synthesis Ex.12 | 0 | 30 | 70 | 0 | 37 | 19 | 44 | Sequence |
| Ex. 11 | Synthesis Ex.13 | 0 | 30 | 70 | 0 | 37 | 9 | 54 | Sequence |
| Comp.Ex. 6 | Synthesis Ex.15 | 0 | 40 | 60 | 0 | 50 | 0 | 50 | Random |
| Comp.Ex. 7 | Synthesis Ex.14 | 0 | 40 | 60 | 0 | 70 | 0 | 30 | Random |
| Comp.Ex. 3 | Kapton E | - | - | - | - | - | - | - | - |
| Comp.Ex. 4 | Apical NPI | - | - | - | - | - | - | - | - |
| Comp.Ex. 5 | Apical AH | - | - | - | - | - | - | - | - |

Table 2 continues as below.

| | Film thick-ness | M of E | Strain | | | | | | Tear strength during low-temperature baking | Wire property | | | | | |
|---|---|---|---|---|---|---|---|---|---|---|---|---|---|---|---|
| | | | | | | | | | | 12.5 μ | 16 μ | 17 μ | 19 μ | 25 μ | 50 μ |
| | | | 5% | 10% | 15% | 20% | 25% | Max | | Abrasion resistance | | | | | |
| | μm | GPa | MPa | MPa | MPa | MPa | MPa | MPa | N/mm | N of T | N of T | N of T | N of T | N of T | N of T |
| Ex. 6 | 17 | 11.2 | 288 | 323 | 343 | 359 | 374 | 382 | 0.45 | - | - | - | - | - | 9033 |
| Ex. 5 | 16 | 10.3 | 268 | 295 | 314 | 330 | 340 | 345 | 1.70 | 4.8 | - | - | - | 41 | 6912 |
| Ex. 7 | 17 | 11.4 | 300 | 334 | 355 | - | - | 361 | 0.97 | - | - | - | - | - | - |
| Ex. 8 | 17 | 9.9 | 248 | 262 | 278 | - | - | 278 | 1.11 | - | - | - | - | - | - |
| Ex. 9 | 17 | 9.4 | 238 | 258 | 276 | - | - | 285 | 142 | - | - | - | - | - | - |
| Ex.10 | 17 | 7.7 | 213 | 239 | 254 | 267 | 278 | 284 | - | - | - | - | - | - | - |
| Ex.11 | 17 | 7.4 | 213 | 242 | 255 | - | - | 256 | - | - | - | - | - | - | - |
| Comp. Ex. 6 | 17 | 6.1 | 175 | 208 | 222 | 235 | 247 | 276 | - | - | - | - | - | - | - |
| Comp. Ex. 7 | 17 | 6.1 | 167 | 204 | 221 | 236 | 249 | 260 | - | - | - | - | - | - | - |
| Comp. Ex. 3 | 25 | 6.1 | 170 | 198 | 214 | 227 | 241 | 333 | - | 1.2 | - | - | - | 7.4 | 585 |
| Comp. Ex. 4 | 25 | 4.5 | 113 | 152 | 175 | 191 | 201 | 275 | - | 1.1 | - | - | - | 4.8 | 92 |
| Comp. Ex. 5 | 19 | 3.2 | 91 | 122 | 141 | 150 | 156 | 243 | | 1.0 | - | - | 1.6 | 4.0 | 37 |

"M of E" represents "Modulus of elasticity". "N of T" represents "the number of times".

(Synthesis Example 16: Synthesis of polyimide precursor 16)

To a glass flask whose volume was 2000 ml introduced was 656.7 g of DMF. Then, 22.1 g (110.4 mmol) of 4,4'-ODA, 11.3 g (27.5 mmol) of BAPP, 16.2 g (55.1 mmol) of BPDA, and 22.2 g (68.9 mmol) of BTDA were added to the glass flask and stirred for one hour to dissolve, to which 14.9 g (137.8 mmol) of PDA and 31.3 g (143.5 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 16 was obtained.

Table 3 shows mol% of each dianhydride component and each diamine component which were used in all steps.

In a case where the total number of moles of a dianhydride component and a diamine component which are used in the step (A) is 100 mol%, an ether amount is calculated in the same manner as Synthesis Example 1 to be 63.2 mol%.

(Synthesis Example 17: Synthesis of polyimide precursor 17)

To a glass flask whose volume was 2000 ml introduced was 655.7 g of DMF. Then, 28.9 g (144.3 mmol) of 4,4'-ODA, 8.5 g (28.9 mmol) of BPDA, and 32.5 g (100.9 mmol) of BTDA were added to the glass flask and stirred for one hour to dissolve, to which 15.6 g (144.3 mmol) of PDA and 32.7 g (149.9 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 17 was obtained.

Table 3 shows mol% of each dianhydride component and each diamine component which were used in all steps.

In a case where the total number of moles of a dianhydride component and a diamine component which are used in the step (A) is 100 mol%, an ether amount is calculated in the same manner as Synthesis Example 1 to be 52.7 mol%.

(Synthesis Example 18: Synthesis of polyimide precursor 18)

To a glass flask whose volume was 2000 ml introduced was 645.9 g of DMF. Then, 31.0 g (154.8 mmol) of 4,4'-ODA, 18.2 g (61.9 mmol) of BPDA, and 24.9 g (77.3 mmol) of BTDA were added to the glass flask and stirred for one hour to dissolve, to which 16.7 g (154.4 mmol) of PDA and 35.1 g (160.9 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 18 was obtained.

Table 3 shows mol% of each dianhydride component and each diamine component which were used in all steps.

In a case where the total number of moles of a dianhydride component and a diamine component which are used in the step (A) is 100 mol%, an ether amount is calculated in the same manner as Synthesis Example 1 to be 52.7 mol%.

(Synthesis Example 19: Synthesis of polyimide precursor 19)

To a glass flask whose volume was 2000 ml introduced was 636.3 g of DMF. Then, 32.9 g (164.3 mmol) of 4,4'-ODA, 19.4 g (65.9 mmol) of BPDA, and 26.5 g (82.2 mmol) of BTDA were added to the glass flask and stirred for one hour to dissolve, to which 17.8 g (164.6 mmol) of PDA and 37.3 g (171.0 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 19 was obtained.
Table 3 shows mol% of each dianhydride component and each diamine component which were used in all steps.
In a case where the total number of moles of a dianhydride component and a diamine component which are used in the step (A) is 100 mol%, an ether amount is calculated in the same manner as Synthesis Example 1 to be 52.6 mol%.

(Synthesis Example 20: Synthesis of polyimide precursor 20)

To a glass flask whose volume was 2000 ml introduced was 636.1 g of DMF. Then, 33.1 g (165.3 mmol) of 4,4'-ODA, 19.4 g (65.9 mmol) of BPDA, and 24.5 g (76.0 mmol) of BTDA were added to the glass flask and stirred for one hour to dissolve, to which 17.9 g (165.5 mmol) of PDA and 38.9 g (178.3 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 20 was obtained.
Table 3 shows mol% of each dianhydride component and each diamine component which were used in all steps.
In a case where the total number of moles of a dianhydride component and a diamine component which are used in the step (A) is 100 mol%, an ether amount is calculated in the same manner as Synthesis Example 1 to be 53.8 mol%.

(Synthesis Example 21: Synthesis of polyimide precursor 21)

To a glass flask whose volume was 2000 ml introduced was 655.2 g of DMF. Then, 29.4 g (146.8 mmol) of 4,4'-ODA, 17.3 g (58.8 mmol) of BPDA, and 18.9 g (58.7 mmol) of BTDA were added to the glass flask and stirred for one hour to dissolve, to which 15.9 g (147 mmol) of PDA and 36.5 g (167.3 mmol) of PMDA were then added and stirred for one hour to dissolve, so that a reaction liquid was obtained. To the reaction liquid gradually added was a separately adjusted DMF solution (6 wt%) of PMDA. The addition of the DMF solution was stopped when viscosity reached 2600 poises. Consequently, a polyimide precursor 21 was obtained.
Table 3 shows mol% of each dianhydride component and each diamine component which were used in all steps.
In a case where the total number of moles of a dianhydride component and a diamine component which are used in the step (A) is 100 mol%, an ether amount is calculated in the same manner as Synthesis Example 1 to be 55.6 mol%.

(Synthesis Example 22: Synthesis of polyimide precursor 22)

To a glass flask whose volume was 2000 ml introduced was 655.4 g of DMF. Then, 29.2 g (145.8 mmol) of 4,4'-ODA, 21.4 g (72.7 mmol) of BPDA, and 18.8 g (58.3 mmol) of BTDA were added to the glass flask and stirred for one hour to dissolve, to which 15.7 g (145.2 mmol) of PDA and 33.0 g (151.3 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 22 was obtained.
Table 3 shows mol% of each dianhydride component and each diamine component which were used in all steps.
In a case where the total number of moles of a dianhydride component and a diamine component which are used in the step (A) is 100 mol%, an ether amount is calculated in the same manner as Synthesis Example 1 to be 52.7 mol%.

(Synthesis Example 23: Synthesis of polyimide precursor 23)

To a glass flask whose volume was 2000 ml introduced was 655.4 g of DMF. Then, 29.3 g (146.3 mmol) of 4,4'-ODA, 25.8 g (87.7 mmol) of BPDA, and 14.1 g (43.8 mmol) of BTDA were added to the glass flask and stirred for one hour to dissolve, to which 15.8 g (146.1 mmol) of PDA and 33.1 g (151.8 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 23 was obtained.

Table 3 shows mol% of each dianhydride component and each diamine component which were used in all steps.

In a case where the total number of moles of a dianhydride component and a diamine component which are used in the step (A) is 100 mol%, an ether amount is calculated in the same manner as Synthesis Example 1 to be 52.7 mol%.

(Synthesis Example 24: Synthesis of polyimide precursor 24)

To a glass flask whose volume was 2000 ml introduced was 655.1 g of DMF. Then, 29.6 g (147.8 mmol) of 4,4'-ODA, and 39.1 g (132.9 mmol) of BPDA were added to the glass flask and stirred for one hour to dissolve, to which 16.0 g (148.0 mmol) of PDA and 33.5 g (153.6 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 24 was obtained.

Table 3 shows mol% of each dianhydride component and each diamine component which were used in all steps.

In a case where the total number of moles of a dianhydride component and a diamine component which are used in the step (A) is 100 mol%, an ether amount is calculated in the same manner as Synthesis Example 1 to be 52.7 mol%.

(Synthesis Example 25: Synthesis of polyimide precursor 25)

To a glass flask whose volume was 2000 ml introduced was 634.8 g of DMF. Then, 34.6 g (172.8 mmol) of 4,4'-ODA, 22.3 g (69.2 mmol) of BTDA, and 16.6 g (76.1 mmol) of PMDA were added to the glass flask and stirred for one hour to dissolve, to which 18.7 g (172.9 mmol) of PDA and 41.5 g (190.3 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 25 was obtained.

Table 3 shows mol% of each dianhydride component and each diamine component which were used in all steps.

In a case where the total number of moles of a dianhydride component and a diamine component which are used in the step (A) is 100 mol%, an ether amount is calculated in the same manner as Synthesis Example 1 to be 54.3 mol%.

(Synthesis Example 26: Synthesis of polyimide precursor 26)

To a glass flask whose volume was 2000 ml introduced was 657.0 g of DMF. Then, 21.8 g (108.9 mmol) of 4,4'-ODA, 11.2 g (27.3 mmol) of BAPP, and 39.5 g (122.6 mmol) of BTDA were added to the glass flask and stirred for one hour to dissolve, to which 14.7 g (135.9 mmol) of PDA and 30.9 g (141.7 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 26 was obtained.

Table 3 shows mol% of each dianhydride component and each diamine component which were used in all steps.

In a case where the total number of moles of a dianhydride component and a diamine component which are used in the step (A) is 100 mol%, an ether amount is calculated in the same manner as Synthesis Example 1 to be 63.2 mol%.

(Synthesis Example 27: Synthesis of polyimide precursor 27)

To a glass flask whose volume was 2000 ml introduced was 636.3 g of DMF. Then, 26.3 g (131.3 mmol) of 4,4'-ODA, 13.5 g (32.9 mmol) of BAPP, 21.2 g (65.8 mmol) of BTDA, and 17.9 g (82.1 mmol) of PMDA were added to the glass flask and stirred for one hour to dissolve, to which 17.8 g (164.6 mmol) of PDA and 37.2 g (170.5 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 27 was obtained.

Table 3 shows mol% of each dianhydride component and each diamine component which were used in all steps.

In a case where the total number of moles of a dianhydride component and a diamine component which are used in the step (A) is 100 mol%, an ether amount is calculated in the same manner as Synthesis Example 1 to be 63.2 mol%.

(Synthesis Example 28: Synthesis of polyimide precursor 28)

To a glass flask whose volume was 2000 ml introduced was 637.6 g of DMF. Then, 18.8 g (93.9 mmol) of 4,4'-ODA, 25.7 g (62.6 mmol) of BAPP, 20.1 g (62.4 mmol) of BTDA, and 17.0 g (77.9 mmol) of PMDA were added to the glass flask and stirred for one hour to dissolve, to which 16.9 g (156.3 mmol) of PDA and 35.4 g (162.3 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 28 was obtained.
Table 3 shows mol% of each dianhydride component and each diamine component which were used in all steps.
In a case where the total number of moles of a dianhydride component and a diamine component which are used in the step (A) is 100 mol%, an ether amount is calculated in the same manner as Synthesis Example 1 to be 73.8 mol%.

(Synthesis Example 29: Synthesis of polyimide precursor 29)

To a glass flask whose volume was 2000 ml introduced was 656.6 g of DMF. Then, 27.8 g (138.8 mmol) of 4,4'-ODA, and 36.7 g (124.7 mmol) of BPDA were added to the glass flask and stirred for one hour to dissolve, to which 15.0 g (138.7 mmol) of PDA, 22.3 g (69.2 mmol) of BTDA and 16.3 g (74.7 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 29 was obtained.
Table 3 shows mol% of each dianhydride component and each diamine component which were used in all steps.
In a case where the total number of moles of a dianhydride component and a diamine component which are used in the step (A) is 100 mol%, an ether amount is calculated in the same manner as Synthesis Example 1 to be 52.7 mol%.

(Synthesis Example 30: Synthesis of polyimide precursor 30)

To a glass flask whose volume was 2000 ml introduced was 656.2 g of DMF. Then, 28.3 g (141.3 mmol) of 4,4'-ODA, 29.1 g (98.9 mmol) of BPDA, and 6.2 g (28.4 mmol) of PMDA were added to the glass flask and stirred for one hour to dissolve, to which 15.3 g (141.5 mmol) of PDA, 22.7 g (70.4 mmol) of BTDA and 16.6 g (76.1 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 30 was obtained.
Table 3 shows mol% of each dianhydride component and each diamine component which were used in all steps.
In a case where the total number of moles of a dianhydride component and a diamine component which are used in the step (A) is 100 mol%, an ether amount is calculated in the same manner as Synthesis Example 1 to be 52.6 mol%.

(Synthesis Example 31: Synthesis of polyimide precursor 31)

To a glass flask whose volume was 2000 ml introduced was 656.7 g of DMF. Then, 27.7 g (138.3 mmol) of 4,4'-ODA, 16.3 g (55.4 mmol) of BPDA, and 22.3 g (69.2 mmol) of BTDA were added to the glass flask and stirred for one hour to dissolve, to which 14.9 g (137.8 mmol) of PDA, 17.8 g (55.2 mmol) of BTDA, and 19.3 g (88.5 mmol) of PMDA were then added and stirred for one hour to dissolve, so that a reaction liquid was obtained. To the reaction liquid gradually added was a separately adjusted DMF solution (6 wt%) of PMDA. The addition of the DMF solution was stopped when viscosity reached 2600 poises. Consequently, a polyimide precursor 31 was obtained.
Table 3 shows mol% of each dianhydride component and each diamine component which were used in all steps.
In a case where the total number of moles of a dianhydride component and a diamine component which are used in the step (A) is 100 mol%, an ether amount is calculated in the same manner as Synthesis Example 1 to be 52.6 mol%.

(Synthesis Example 32: Synthesis of polyimide precursor 32)

To a glass flask whose volume was 2000 ml introduced was 638.2 g of DMF. Then, 40.5 g (98.7 mmol) of BAPP, 13.2 g (65.9 mmol) of 4,4'-ODA, 19.3 g (65.6 mmol) of BPDA, and 17.9 g (82.1 mmol) of PMDA were added to the glass flask and stirred for one hour to dissolve, to which 17.8 g (164.6 mmol) of PDA, and 38.3 g (175.6 mmol) of PMDA were then added and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 32 was obtained.

Table 3 shows mol% of each dianhydride component and each diamine component which were used in all steps.

In a case where the total number of moles of a dianhydride component and a diamine component which are used in the step (A) is 100 mol%, an ether amount is calculated in the same manner as Synthesis Example 1 to be 84.3 mol%.

(Synthesis Example 33: Synthesis of polyimide precursor 33)

To a glass flask whose volume was 2000 ml introduced was 634.8 g of DMF. Then, 34.6 g (172.8 mmol) of 4,4'-ODA, 18.7 g (172.9 mmol) of PDA, 22.3 g (69.2 mmol) of BTDA, and 58.1 g (266.4 mmol) of PMDA were added to the glass flask and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 33 was obtained.

Table 3 shows mol% of each dianhydride component and each diamine component which were used in all steps.

(Synthesis Example 34: Synthesis of polyimide precursor 34)

To a glass flask whose volume was 2000 ml introduced was 638.9 g of DMF. Then, 36.7 g (89.4 mmol) of BAPP, 11.9 g (59.4 mmol) of 4,4'-ODA, 16.1 g (148.9 mmol) of PDA, 19.2 g (59.6 mmol) of BTDA, and 50.1 g (229.7 mmol) of PMDA were added to the glass flask and stirred for one hour to dissolve, so that a reaction liquid was obtained. To the reaction liquid gradually added was a separately adjusted DMF solution (7 wt%) of PMDA. The addition of the DMF solution was stopped when viscosity reached 2500 poises. Consequently, a polyimide precursor 34 was obtained.

Table 3 shows mol% of each dianhydride component and each diamine component which were used in all steps.

(Synthesis Example 35: Synthesis of polyimide precursor 35)

To a glass flask whose volume was 2000 ml introduced was 652.0 g of DMF. Then, 40.5 g (98.7 mmol) of BAPP, 13.2 g (65.9 mmol) of 4,4'-ODA, 17.8 g (164.6 mmol) of PDA, 19.3 g (65.6 mmol) of BPDA, and 57.3 g (262.7 mmol) of PMDA were added to the glass flask and stirred for one hour to dissolve, so that a reaction liquid was obtained. To the reaction liquid gradually added was a separately adjusted DMF solution (6 wt%) of PMDA. The addition of the DMF solution was stopped when viscosity reached 2600 poises. Consequently, a polyimide precursor 35 was obtained.

Table 3 shows mol% of each dianhydride component and each diamine component which were used in all steps.

[Example 12]

A polyimide film whose thickness was 16 $\mu$m to 21 $\mu$m was obtained with use of (i) the polyimide precursor 16 obtained in Synthesis Example 16 and (ii) a curing agent identical to that of Example 1. A tensile stress at x% strain was measured with use of the obtained polyimide film. Table 3 shows results. A modulus of elasticity was 8.45 GPa (8.5 GPa in a case where a significant figure after a decimal point is one digit).

[Example 13]

A polyimide film whose thickness was 15 $\mu$m to 21 $\mu$m was obtained with use of (i) the polyimide precursor 17 obtained in Synthesis Example 17 and (ii) a curing agent identical to that of Example 1. A tensile stress at x% strain was measured with use of the obtained polyimide film. Table 3 shows results. A modulus of elasticity was 8.46 GPa (8.5 GPa in a case where a significant figure after a decimal point is one digit).

[Example 14]

A polyimide film whose thickness was 16 $\mu$m to 21 $\mu$m was obtained with use of (i) the polyimide precursor 18 obtained in Synthesis Example 18 and (ii) a curing agent identical to that of Example 1. A tensile stress at x% strain was measured with use of the obtained polyimide film. Table 3 shows results. A modulus of elasticity was 8.34 GPa (8.3 GPa in a case where a significant figure after a decimal point is one digit).

[Example 15]

A polyimide film whose thickness was 16 $\mu$m to 21 $\mu$m was obtained with use of (i) the polyimide precursor 19 obtained in Synthesis Example 19 and (ii) a curing agent identical to that of Example 1. A tensile stress at x% strain was measured with use of the obtained polyimide film. Table 3 shows results. A modulus of elasticity was 8.42 GPa (8.4 GPa in a case where a significant figure after a decimal point is one digit).

[Example 16]

A polyimide film whose thickness was 16 $\mu$m to 21 $\mu$m was obtained with use of (i) the polyimide precursor 20 obtained in Synthesis Example 20 and (ii) a curing agent identical to that of Example 1. A tensile stress at x% strain was measured with use of the obtained polyimide film. Table 3 shows results. A modulus of elasticity was 8.07 GPa (8.1 GPa in a case where a significant figure after a decimal point is one digit).

[Example 17]

A polyimide film whose thickness was 16 $\mu$m to 21 $\mu$m was obtained with use of (i) the polyimide precursor 21 obtained in Synthesis Example 21 and (ii) a curing agent identical to that of Example 1. A tensile stress at x% strain was measured with use of the obtained polyimide film. Table 3 shows results. A modulus of elasticity was 7.89 GPa (7.9 GPa in a case where a significant figure after a decimal point is one digit).

[Example 18]

A polyimide film whose thickness was 16 $\mu$m to 21 $\mu$m was obtained with use of (i) the polyimide precursor 22 obtained in Synthesis Example 22 and (ii) a curing agent identical to that of Example 1. A tensile stress at x% strain was measured with use of the obtained polyimide film. Table 3 shows results. A modulus of elasticity was 8.2 GPa.

[Example 19]

A polyimide film whose thickness was 16 $\mu$m to 21 $\mu$m was obtained with use of (i) the polyimide precursor 23 obtained in Synthesis Example 23 and (ii) a curing agent identical to that of Example 1. A tensile stress at x% strain was measured with use of the obtained polyimide film. Table 3 shows results. A modulus of elasticity was 8.29 GPa (8.3 GPa in a case where a significant figure after a decimal point is one digit).

[Example 20]

A polyimide film whose thickness was 16 $\mu$m to 21 $\mu$m was obtained with use of (i) the polyimide precursor 24 obtained in Synthesis Example 24 and (ii) a curing agent identical to that of Example 1. A tensile stress at x% strain was measured with use of the obtained polyimide film. Table 3 shows results. A modulus of elasticity was 9.22 GPa (9.2 GPa in a case where a significant figure after a decimal point is one digit).

[Example 21]

A polyimide film whose thickness was 16 $\mu$m to 21 $\mu$m was obtained with use of (i) the polyimide precursor 25 obtained in Synthesis Example 25 and (ii) a curing agent identical to that of Example 1. A tensile stress at x% strain was measured with use of the obtained polyimide film. Table 3 shows results. A modulus of elasticity was 7.53 GPa (7.5 GPa in a case where a significant figure after a decimal point is one digit).

[Example 22]

A polyimide film whose thickness was 16 $\mu$m to 21 $\mu$m was obtained with use of (i) the polyimide precursor 26 obtained in Synthesis Example 26 and (ii) a curing agent identical to that of Example 1. A tensile stress at x% strain was measured with use of the obtained polyimide film. Table 3 shows results. A modulus of elasticity was 8.62 GPa (8.6 GPa in a case where a significant figure after a decimal point is one digit).

[Example 23]

A polyimide film whose thickness was 16 $\mu$m to 21 $\mu$m was obtained with use of (i) the polyimide precursor 27 obtained in Synthesis Example 27 and (ii) a curing agent identical to that of Example 1. A tensile stress at x% strain was measured with use of the obtained polyimide film. Table 3 shows results. A modulus of elasticity was 7.63 GPa (7.6 GPa in a case where a significant figure after a decimal point is one digit).

[Comparative Example 8]

A polyimide film whose thickness was 16 $\mu$m to 21 $\mu$m was obtained with use of (i) the polyimide precursor 28 obtained in Synthesis Example 28 and (ii) a curing agent identical to that of Example 1. A tensile stress at x% strain was measured with use of the obtained polyimide film. Table 3 shows results. A modulus of elasticity was 7.23 GPa (7.2 GPa in a case where a significant figure after a decimal point is one digit).

[Example 24]

A polyimide film whose thickness was 16 $\mu$m to 21 $\mu$m was obtained with use of (i) the polyimide precursor 29 obtained in Synthesis Example 29 and (ii) a curing agent identical to that of Example 1. A tensile stress at x% strain was measured with use of the obtained polyimide film. Table 3 shows results. A modulus of elasticity was 7.2 GPa.

[Example 25]

A polyimide film whose thickness was 16 $\mu$m to 21 $\mu$m was obtained with use of (i) the polyimide precursor 30 obtained in Synthesis Example 30 and (ii) a curing agent identical to that of Example 1. A tensile stress at x% strain was measured with use of the obtained polyimide film. Table 3 shows results. A modulus of elasticity was 6.92 GPa (6.9 GPa in a case where a significant figure after a decimal point is one digit).

[Example 26]

A polyimide film whose thickness was 15 $\mu$m to 21 $\mu$m was obtained with use of (i) the polyimide precursor 31 obtained in Synthesis Example 31 and (ii) a curing agent identical to that of Example 1. A tensile stress at x% strain was measured with use of the obtained polyimide film. Table 3 shows results. A modulus of elasticity was 7.56 GPa (7.6 GPa in a case where a significant figure after a decimal point is one digit).

[Comparative Example 9]

A polyimide film whose thickness was 16 $\mu$m to 21 $\mu$m was obtained with use of (i) the polyimide precursor 32 obtained in Synthesis Example 32 and (ii) a curing agent identical to that of Example 1. A tensile stress at x% strain was measured with use of the obtained polyimide film. Table 3 shows results. A modulus of elasticity was 6.74 GPa (6.7 GPa in a case where a significant figure after a decimal point is one digit).

[Comparative Example 10]

A polyimide film whose thickness was 16 $\mu$m to 21 $\mu$m was obtained with use of (i) the polyimide precursor 33 obtained in Synthesis Example 33 and (ii) a curing agent identical to that of Example 1. A tensile stress at x% strain was measured with use of the obtained polyimide film. Table 3 shows results. A modulus of elasticity was 5.706 GPa (5.7 GPa in a case where a significant figure after a decimal point is one digit).

[Comparative Example 11]

A polyimide film whose thickness was 16 $\mu$m to 21 $\mu$m was obtained with use of (i) the polyimide precursor 34 obtained in Synthesis Example 34 and (ii) a curing agent identical to that of Example 1. A tensile stress at x% strain was measured with use of the obtained polyimide film. Table 3 shows results. A modulus of elasticity was 4.71 GPa (4.7 GPa in a case where a significant figure after a decimal point is one digit).

[Comparative Example 12]

A polyimide film whose thickness was 16 $\mu$m to 21 $\mu$m was obtained with use of (i) the polyimide precursor 35 obtained in Synthesis Example 35 and (ii) a curing agent identical to that of Example 1. A tensile stress at x% strain was measured with use of the obtained polyimide film. Table 3 shows results. A modulus of elasticity was 4.766 GPa (4.8 GPa in a case where a significant figure after a decimal point is one digit).

**EP 3 006 209 B1**

Table 3 below shows, for reference, evaluated wire properties (abrasion resistance) of Examples 1 through 4 and Comparative Examples 1 through 5. As is clear from Table 3, the polyimide films of Examples 1 through 4 and Examples 12 through 26 have favorable tensile stress at 5% strain and tensile stress at 15% strain, and physical properties of "high yield strength" and "being unlikely to plastically deform", as compared to any of Comparative Examples and the currently commercially-available products. Therefore, it is considered that insulating coating materials including the polyimide films of Examples 1 through 4 and Examples 12 through 26 are excellent in abrasion resistance.

[Table 3]

| | Kinds of Varnish | Molar ratio | | | | | | | Ether amount | Polymerization pattern |
| | | Diamine | | | | Dianhydride | | | | |
| | | BAPP | ODA | PDA | TPE-R | PMDA | BTDA | BPDA | | |
| | | % | % | % | % | % | % | % | - | - |
| Ex. 12 | Synthesis Ex.16 | 10 | 40 | 50 | 0 | 55 | 25 | 20 | 63.2 | Sequence |
| Ex. 13 | Synthesis Ex.17 | 0 | 50 | 50 | 0 | 55 | 35 | 10 | 52.7 | Sequence |
| Ex. 3 | Synthesis Ex.3 | 0 | 50 | 50 | 0 | 55 | 25 | 20 | 52.6 | Sequence |
| Ex. 14 | Synthesis Ex.18 | | | | | | | | 52.7 | Sequence |
| Ex. 15 | Synthesis Ex.19 | | | | | | | | 52.6 | Sequence |
| Ex. 4 | Synthesis Ex.4 | 0 | 50 | 50 | 0 | 57 | 23 | 20 | 53.7 | Sequence |
| Ex. 16 | Synthesis Ex.20 | | | | | | | | 53.8 | Sequence |
| Ex. 17 | Synthesis Ex.21 | 0 | 50 | 50 | 0 | 60 | 20 | 20 | 55.6 | Sequence |
| Ex. 18 | Synthesis Ex.22 | 0 | 50 | 50 | 0 | 55 | 20 | 25 | 52.7 | Sequence |
| Ex. 19 | Synthesis Ex.23 | 0 | 50 | 50 | 0 | 55 | 15 | 30 | 52.7 | Sequence |
| Ex. 20 | Synthesis Ex.24 | 0 | 50 | 50 | 0 | 55 | 0 | 45 | 52.7 | Sequence |
| Ex. 21 | Synthesis Ex.25 | 0 | 50 | 50 | 0 | 80 | 20 | 0 | 54.3 | Sequence |
| Ex. 2 | Synthesis Ex.2 | 0 | 50 | 50 | 0 | 55 | 45 | 0 | 52.7 | Sequence |
| Ex. 22 | Synthesis Ex.26 | 10 | 40 | 50 | 0 | 55 | 45 | 0 | 63.2 | Sequence |
| Ex. 23 | Synthesis Ex.27 | 10 | 40 | 50 | 0 | 80 | 20 | 0 | 63.2 | Sequence |
| Comp.Ex.8 | Synthesis Ex.28 | 20 | 30 | 50 | 0 | 80 | 20 | 0 | 73.8 | Sequence |
| Comp.Ex.2 | Synthesis Ex.8 | 30 | 20 | 50 | 0 | 80 | 20 | 0 | 84.1 | Sequence |
| Ex. 24 | Synthesis Ex.29 | 0 | 50 | 50 | 0 | 30 | 25 | 45 | 52.7 | Sequence |
| Ex. 25 | Synthesis Ex.30 | 0 | 50 | 50 | 0 | 40 | 25 | 35 | 52.6 | Sequence |
| Ex. 26 | Synthesis Ex.31 | 0 | 50 | 50 | 0 | 35 | 45 | 20 | 52.6 | Sequence |
| Ex. 1 | Synthesis Ex.1 | 0 | 45 | 55 | 0 | 50 | 50 | 0 | 47.4 | Sequence |
| Comp.Ex.9 | Synthesis Ex.32 | 30 | 20 | 50 | 0 | 80 | 0 | 20 | 84.3 | Sequence |
| Comp.Ex.10 | Synthesis Ex.33 | 0 | 50 | 50 | 0 | 80 | 20 | 0 | - | Random |
| Comp.Ex.11 | Synthesis Ex.34 | 30 | 20 | 50 | 0 | 80 | 20 | 0 | - | Random |
| Comp.Ex.1 | Synthesis Ex.7 | 0 | 50 | 50 | 0 | 55 | 25 | 20 | - | Random |
| Comp.Ex.12 | Synthesis Ex.35 | 30 | 20 | 50 | 0 | 80 | 0 | 20 | - | Random |
| Comp.Ex.3 | Kapton E | - | - | - | - | - | - | - | - | - |
| Comp.Ex.4 | Apical NPI | - | - | - | - | - | - | - | - | - |
| Comp.Ex.5 | Apical AH | - | - | - | - | - | - | - | - | - |

| | Mechanical property | | | | | | | | |
| | Film thickness | Modulus of Elasticity | Strain | | | | | | Tear strength during low-temperature baking |
| | | | 5% | 10% | 15% | 20% | 25% | Max | |
| | μm | GPa | MPa | MPa | MPa | MPa | MPa | MPa | N/mm |
| Ex. 12 | 18 | 8.45 | 218 | 240 | 249 | - | - | 251 | 2.07 |
| Ex. 13 | 15 | 8.46 | 223 | 252 | 265 | - | - | 269 | 1.91 |
| Ex. 3 | 16 | 8.7 | 222 | 264 | 258 | 268 | 279 | 291 | 1.99 |
| Ex. 14 | 19 | 8.34 | 220 | 247 | 260 | 272 | 284 | 290 | 2.07 |
| Ex. 15 | 18 | 8.42 | 221 | 249 | 262 | 274 | 286 | 287 | 1.23 |
| Ex. 4 | 19 | 8.09 | 214 | 245 | 260 | 270 | 282 | 290 | 1.64 |
| Ex. 16 | 19 | 8.07 | 212 | 242 | 255 | 267 | 277 | 281 | 1.00 |
| Ex. 17 | 16 | 7.89 | 210 | 245 | 261 | 273 | - | 276 | 0.93 |
| Ex. 18 | 16 | 8.2 | 225 | 259 | 274 | - | - | 282 | 2.01 |
| Ex. 19 | 17 | 8.29 | 223 | 255 | 271 | 287 | - | 290 | 0.99 |
| Ex. 20 | 17 | 9.22 | 235 | 269 | 288 | - | - | 295 | 1.02 |
| Ex. 21 | 20 | 7.53 | 186 | 218 | 232 | 242 | 251 | 276 | 0.66 |
| Ex. 2 | 17 | 8.4 | 229 | 250 | 259 | 269 | 280 | 300 | 2.01 |
| Ex. 22 | 17 | 8.62 | 222 | 239 | 254 | - | - | 265 | 1.97 |
| Ex. 23 | 20 | 7.63 | 188 | 214 | 225 | 232 | 244 | 245 | 2.07 |
| Comp.Ex.8 | 20 | 7.23 | 179 | 203 | 211 | 221 | - | 223 | 2.00 |
| Comp.Ex.2 | 17 | 7.0 | 176 | 193 | 198 | 202 | 207 | 230 | 2.23 |
| Ex. 24 | 19 | 7.2 | 197 | 232 | 246 | 260 | - | 267 | 1.49 |
| Ex. 25 | 17 | 6.92 | 193 | 233 | 250 | 267 | 282 | 299 | 1.78 |
| Ex. 26 | 15 | 7.56 | 209 | 240 | 253 | 263 | 275 | 281 | 2.00 |
| Ex. 1 | 19 | 8.89 | 233 | 257 | 266 | 271 | 282 | 286 | 2.22 |
| Comp.Ex.9 | 20 | 6.74 | 165 | 189 | - | - | - | 199 | 1.02 |
| Comp.Ex.10 | 17 | 5.706 | 147 | 183 | 197 | 206 | 215 | 246 | 0.67 |
| Comp.Ex.11 | 18 | 4.71 | 123 | 152 | - | - | - | 161 | 0.59 |
| Comp.Ex.1 | 17 | 5.8 | 163 | 192 | 205 | 214 | 224 | 240 | 2.08 |
| Comp.Ex.12 | 21 | 4.766 | 122 | 152 | 161 | 164 | - | 168 | 0.41 |
| Comp.Ex.3 | 25 | 6.1 | 170 | 198 | 214 | 227 | 241 | 333 | - |
| Comp.Ex.4 | 25 | 4.5 | 113 | 152 | 175 | 191 | 201 | 275 | - |
| Comp.Ex.5 | 19 | 3.2 | 91 | 122 | 141 | 150 | 156 | 243 | - |

Table 3 contines as above.

| | Wire propery | | | | | |
| | 12.5 μ | 16 μ | 17 μ | 19 μ | 25 μ | 50 μ |
| | Abrasion resistance | | | | | |
| | N of T | N of T | N of T | N of T | N of T | N of T |
| Ex. 12 | - | - | - | - | - | - |
| Ex. 13 | - | - | - | - | - | - |
| Ex. 3 | - | 3.8 | - | - | - | 1163 |
| Ex. 14 | - | - | - | - | - | - |
| Ex. 15 | - | - | - | - | - | - |
| Ex. 4 | 1.8 | - | - | - | 28 | 1153 |
| Ex. 16 | - | - | - | - | - | - |
| Ex. 17 | - | - | - | - | - | - |
| Ex. 18 | - | - | - | - | - | - |
| Ex. 19 | - | - | - | - | - | - |
| Ex. 20 | - | - | - | - | - | - |
| Ex. 21 | - | - | - | - | - | - |
| Ex. 2 | - | - | 4.0 | - | - | 1110 |
| Ex. 22 | - | - | - | - | - | - |
| Ex. 23 | - | - | - | - | - | - |
| Comp.Ex.8 | - | - | - | - | - | - |
| Comp.Ex.2 | - | - | - | - | - | 140 |
| Ex. 24 | - | - | - | - | - | - |
| Ex. 25 | - | - | - | - | - | - |
| Ex. 26 | - | - | - | - | - | - |
| Ex. 1 | - | - | - | - | - | 1225 |
| Comp.Ex.9 | - | - | - | - | - | - |
| Comp.Ex.10 | - | - | - | - | - | - |
| Comp.Ex.11 | - | - | - | - | - | - |
| Comp.Ex.1 | - | - | - | - | - | - |
| Comp.Ex.12 | - | - | - | - | - | - |
| Comp.Ex.3 | 1.2 | - | - | - | 7.4 | 585 |
| Comp.Ex.4 | 1.1 | - | - | - | 4.8 | 92 |
| Comp.Ex.5 | 1.0 | - | - | 1.6 | 4.0 | 37 |

Table 3 contines as above.

# "N of T" represents "the number of times".

Industrial Applicability

An insulating coating material of the present invention has an excellent abrasion resistance. Therefore, the insulating coating material is useful for, for example, an electric wire, a cable, etc., for use in aerospace, and applicable to various industrial fields.

**Claims**

1.  An insulating coating material comprising:

    an insulating film made from a polyimide resin; and
    an adhesive layer made from a fluorocarbon resin,
    the insulating film having a tensile stress at 5% strain of not less than 180 MPa and a tensile stress at 15% strain of not less than 225 MPa, the stresses being obtained by measuring a tensile modulus according to ASTM D882.

2.  The insulating coating material as set forth in claim 1, wherein the insulating film has a tensile stress at 10% strain of not less than 210 MPa, the stress being obtained by measuring the tensile modulus according to ASTM D882.

3.  The insulating coating material as set forth in claim 1 or 2, wherein the insulating film is a polyimide film obtained by imidizing a polyamic acid which is obtained by reacting a diamine component and a dianhydride component, and the dianhydride component includes at least one compound selected from the group consisting of 3,3',4,4'-benzophenone tetracarboxylic dianhydride (BTDA) and 3,3',4,4'-biphenyl tetracarboxylic dianhydride (BPDA).

4.  A method of producing an insulating coating material that includes (i) an insulating film made from a polyimide resin and (ii) an adhesive layer made from a fluorocarbon resin,

    the insulating film being a polyimide film obtained by imidizing a polyamic acid which is obtained by reacting a diamine component and a dianhydride component,
    the polyamic acid being obtained by a production method including the steps of:

    (A) reacting the dianhydride component and the diamine component in an organic polar solvent in a state where either the dianhydride component or the diamine component has excessive moles, so as to obtain a prepolymer having amino groups or dianhydride groups at both terminals; and
    (B) synthesizing the polyamic acid with use of (i) the prepolymer obtained in the step (A) and (ii) a dianhydride component and (iii) a diamine component equal in molar quantity to one another in all steps,

    the method comprising the step of:

    forming the adhesive layer for the insulating film,
    in a case where a total number of moles of the dianhydride component and the diamine component which are used in the step (A) is 100 mol%, an ether amount represented below is not less than 35.0 mol% and not more than 70.0 mol%, the ether amount being a sum total mol% of an oxygen atom derived from an ether bond included by the dianhydride component and the diamine component which are used in the step (A).

5.  The method as set forth in claim 4, wherein in the step (A), the dianhydride component includes at least one compound selected from the group consisting of 3,3',4,4'-benzophenone tetracarboxylic dianhydride (BTDA) and 3,3',4,4'-biphenyl tetracarboxylic dianhydride (BPDA).

6.  The method as set forth in claim 4 or 5, wherein in the step (B), p-phenylenediamine (PDA) and pyromellitic dianhydride (PMDA) account for not less than 70 mol% with respect to 100 mol% in total of the dianhydride component and the diamine component which are used in the step (B).

7.  The method as set forth in any one of claims 4 through 6, wherein the prepolymer formed in the step (A) is obtained through (i) a step of forming, with use of a diamine component (a) and a dianhydride component (b) that has fewer moles than the diamine component (a), the prepolymer having the diamine component at a terminal group or (ii) a step of forming, with use of a diamine component (a) and a dianhydride component (b) that has excessive moles than the diamine component (a), the prepolymer having the dianhydride component at a terminal group,

    when (a) < (b), 0.81 < (a)/(b) < 0.99 is satisfied, and

when (a) > (b), 0.81 < (b)/(a) < 0.99 is satisfied.

8. The insulating coating material as set forth in any one of claims 1 through 3, wherein the insulating film has a thickness of not more than 25 μm.

9. An insulating cable comprising an insulating coating material as set forth in any one of claims 1 through 3, and 8.

10. The insulating cable as set forth in claim 9, wherein the insulating coating material is wound around an electric conductor.

11. A method of producing an insulating cable, comprising the steps of:

carrying out a method, as set forth in any one of claims 4 through 7, of producing an insulating coating material; and winding, around an electric conductor, the insulating coating material obtained by the method of producing the insulating coating material.

**Patentansprüche**

1. Isolierendes Beschichtungsmaterial, umfassend:

einen isolierenden Film aus einem Polyimidharz; und
eine Haftschicht aus einem Fluorkohlenstoffharz,
wobei der isolierende Film eine Zugspannung bei 5% Dehnung von nicht weniger als 180 MPa und eine Zugspannung bei 15% Dehnung von nicht weniger als 225 MPa aufweist, wobei die Spannungen durch Messung eines Zugmoduls gemäß ASTM D882 erhalten werden.

2. Isolierendes Beschichtungsmaterial gemäß Anspruch 1, wobei der isolierende Film eine Zugspannung bei 10 % Dehnung von nicht weniger als 210 MPa aufweist, wobei die Spannung durch Messung des Zugmoduls gemäß ASTM D882 erhalten wird.

3. Isolierendes Beschichtungsmaterial gemäß Anspruch 1 oder 2, wobei der isolierende Film ein Polyimidfilm ist, der durch Imidisierung einer Polyamidsäure erhalten wird, die durch Reaktion einer Diaminkomponente und einer Dianhydridkomponente erhalten wird, und wobei die Dianhydridkomponente mindestens eine Verbindung, ausgewählt aus der Gruppe bestehend aus 3,3',4,4'-Benzophenontetracarbonsäuredianhydrid (BTDA) und 3,3',4,4'-Biphenyltetracarbonsäuredianhydrid (BPDA), enthält.

4. Verfahren zur Herstellung eines isolierenden Beschichtungsmaterials, das (i) einen isolierenden Film aus einem Polyimidharz und (ii) eine Haftschicht aus einem Fluorkohlenstoffharz enthält,

wobei der isolierende Film ein Polyimidfilm ist, der durch Imidisierung einer Polyamidsäure erhalten wird, die durch Reaktion einer Diaminkomponente und einer Dianhydridkomponente erhalten wird,
wobei die Polyamidsäure durch ein Herstellungsverfahren erhalten wird, das die folgenden Schritte umfasst:

(A) Umsetzen der Dianhydridkomponente und der Diaminkomponente in einem organischen polaren Lösungsmittel in einem Zustand, in dem entweder die Dianhydridkomponente oder die Diaminkomponente einen Molüberschuss aufweist, um so ein Präpolymer mit Aminogruppen oder Dianhydridgruppen an beiden Enden zu erhalten; und
(B) Synthetisieren der Polyamidsäure unter Verwendung von (i) dem in Schritt (A) erhaltenen Präpolymer und (ii) einer Dianhydridkomponente und (iii) einer Diaminkomponente, die in allen Schritten in gleicher molarer Menge vorliegen,

wobei das Verfahren die folgenden Schritte umfasst:

Bilden der Haftschicht für den isolierenden Film,
wobei in einem Fall, in dem die Gesamtmolzahl der Dianhydridkomponente und der Diaminkomponente, die im Schritt (A) verwendet werden, 100 mol% beträgt, eine unten dargestellte Ethermenge nicht weniger als 35,0 mol% und nicht mehr als 70,0 mol% beträgt, wobei die Ethermenge eine Summe der Gesamtmol-% eines Sauerstoffatoms ist, das von einer Etherbindung abgeleitet ist, die von der Dianhydridkomponente und der Diaminkomponente, die im Schritt (A) verwendet werden, eingeschlossen ist.

5. Verfahren gemäß Anspruch 4, wobei in Schritt (A) die Dianhydridkomponente mindestens eine Verbindung, ausgewählt aus der Gruppe bestehend aus 3,3',4,4'-Benzophenontetracarbonsäuredianhydrid (BTDA) und 3,3',4,4'-Biphenyltetracarbonsäuredianhydrid (BPDA), enthält.

6. Verfahren gemäß Anspruch 4 oder 5, wobei im Schritt (B) p-Phenylendiamin (PDA) und Pyromellitsäuredianhydrid (PMDA) nicht weniger als 70 mol%, bezogen auf 100 mol% der gesamten Dianhydridkomponente und der Diaminkomponente, die im Schritt (B) verwendet werden, ausmachen.

7. Verfahren gemäß einem der Ansprüche 4 bis 6, wobei das in Schritt (A) gebildete Präpolymer erhalten wird durch (i) einen Schritt der Bildung unter Verwendung einer Diaminkomponente (a) und einer Dianhydridkomponente (b), die weniger Mole als die Diaminkomponente (a) aufweist, wobei das Präpolymer die Diaminkomponente an einer Endgruppe aufweist, oder (ii) einen Schritt der Bildung unter Verwendung einer Diaminkomponente (a) und einer Dianhydridkomponente (b), die einen Molüberschuss gegenüber der Diaminkomponente (a) aufweist, wobei das Präpolymer die Dianhydridkomponente an einer Endgruppe aufweist,

wenn (a) < (b), 0,81 < (a)/(b) < 0,99 erfüllt ist, und
wenn (a) > (b), 0,81 < (b)/(a) < 0,99 erfüllt ist.

8. Das isolierende Beschichtungsmaterial gemäß einem der Ansprüche 1 bis 3, wobei der isolierende Film eine Dicke von nicht mehr als 25 $\mu$m aufweist.

9. Isolierendes Kabel, umfassend ein isolierendes Beschichtungsmaterial gemäß einem der Ansprüche 1 bis 3 und 8.

10. Isolierendes Kabel gemäß Anspruch 9, wobei das isolierende Beschichtungsmaterial um einen elektrischen Leiter gewickelt ist.

11. Verfahren zur Herstellung eines isolierenden Kabels, umfassend die folgenden Schritte:

Durchführen eines Verfahrens gemäß einem der Ansprüche 4 bis 7 zur Herstellung eines isolierenden Beschichtungsmaterials; und
Wickeln des isolierenden Beschichtungsmaterials, das durch das Verfahren zur Herstellung des isolierenden Beschichtungsmaterials erhaltenen wurde, um einen elektrischen Leiter.

**Revendications**

1. Matériau de revêtement isolant comprenant :

un film isolant fait à partir d'une résine de polyimide ; et
une couche adhésive faite à partir d'une résine fluorocarbonée,
le film isolant présentant un effort de traction à 5 % de contrainte non inférieur à 180 MPa et un effort de traction à 15 % de contrainte non inférieur à 225 MPa, les contraintes étant obtenues en mesurant un module de traction conformément à ASTM D882.

2. Matériau de revêtement isolant selon la revendication 1, dans lequel le film isolant présente un effort de traction à 10 % de contrainte non inférieur à 210 MPa, l'effort étant obtenu en mesurant le module de traction conformément à ASTM D882.

3. Matériau de revêtement isolant selon la revendication 1 ou 2, dans lequel le film isolant est un film de polyimide obtenu en imidisant un acide polyamique qui est obtenu en faisant réagir un composant diamine et un composant dianhydride, et
le composant dianhydride inclut au moins un composé sélectionné à partir du groupe consistant en le dianhydride tétracarboxylique 3,3',4,4'-benzophénone (BTDA) et le dianhydride tétracarboxylique 3,3',4,4'-biphényle (BPDA).

**4.** Procédé de production d'un matériau de revêtement isolant qui inclut (i) un film isolant fait à partir d'une résine de polyimide et (ii) une couche adhésive faite à partir d'une résine fluorocarbonée,

le film isolant étant un film de polyimide obtenu en imidisant un acide polyamique qui est obtenu en faisant réagir un composant diamine et un composant dianhydride,
l'acide polyamique étant obtenu par un procédé de production incluant les étapes consistant à :

(A) faire réagir le composant dianhydride et le composant diamine dans un solvant polaire organique dans un état où soit le composant dianhydride soit le composant diamine présente plus de moles, de manière à obtenir un prépolymère présentant des groupes amino ou des groupes dianhydrides au niveau des deux extrémités terminales ; et
(B) synthétiser l'acide polyamique avec l'utilisation (i) du prépolymère obtenu à l'étape (A) et (ii) d'un composant dianhydride et (iii) d'un composant diamine en quantité molaire égale les unes aux autres dans toutes les étapes,

le procédé comprenant l'étape consistant à :

former la couche adhésive pour le film isolant,
dans un cas où un nombre total de moles du composant dianhydride et du composant diamine qui sont utilisés à l'étape (A) est 100 % en moles, une quantité d'éther représenté ci-dessous n'est pas inférieure à 35,0 % en moles et pas supérieure à 70,0 % en moles, la quantité d'éther étant une somme totale en % en moles d'un atome d'oxygène dérivé d'une liaison éther incluse par le composant dianhydride et le composant diamine qui sont utilisés à l'étape (A).

**5.** Procédé selon la revendication 4, dans lequel, à l'étape (A), le composant dianhydride inclut au moins un composé sélectionné à partir du groupe consistant en le dianhydride tétracarboxylique 3,3',4,4'-benzophénone (BTDA) et le dianhydride tétracarboxylique 3,3',4,4'-biphényle (BPDA).

**6.** Procédé selon la revendication 4 ou 5, dans lequel, à l'étape (B), la p-phénylènediamine (PDA) et le dianhydride pyromellitique (PMDA) représentent pas moins de 70 % en moles par rapport à 100 % en moles au total du composant dianhydride et du composant diamine qui sont utilisés à l'étape (B).

**7.** Procédé selon l'une quelconque des revendications 4 à 6, dans lequel le prépolymère formé à l'étape (A) est obtenu par (i) une étape consistant à former, à l'aide d'un composant diamine (a) et d'un composant dianhydride (b) qui présente moins de moles que le composant diamine (a), le prépolymère présentant le composant diamine au niveau d'un groupe terminal ou (ii) une étape consistant à former, à l'aide d'un composant diamine (a) et d'un composant dianhydride (b) qui présente plus de moles que le composant diamine (a), le prépolymère présentant le composant dianhydride au niveau d'un groupe terminal,

lorsque (a) < (b), 0,81 < (a)/(b) < 0,99 est satisfait, et
lorsque (a) > (b), 0,81 < (b)/(a) < 0,99 est satisfait.

**8.** Matériau de revêtement isolant selon l'une quelconque des revendications 1 à 3, dans lequel le film isolant présente une épaisseur non supérieure à 25 $\mu$m.

**9.** Câble isolant comprenant un matériau de revêtement isolant selon l'une quelconque des revendications 1 à 3, et 8.

**10.** Câble isolant selon la revendication 9, dans lequel le matériau de revêtement isolant est enroulé autour d'un conducteur électrique.

**11.** Procédé de production d'un câble isolant, comprenant les étapes consistant à :

exécuter un procédé, selon l'une quelconque des revendications 4 à 7, de production d'un matériau de revêtement isolant ; et
enrouler, autour d'un conducteur électrique, le matériau de revêtement isolant obtenu par le procédé de production du matériau de revêtement isolant.

## FIG. 1

| | | |
|---|---|---|
| ◆ | EXAMPLE 5 | y=5.1052Ln(x)+5.1326 |
| ◉ | EXAMPLE 4 | y=5.8729Ln(x)+8.4904 |
| □ | EXAMPLE 2 | y=5.8557Ln(x)+7.7541 |
| ✳ | COMPARATIVE EXAMPLE 3 | y=5.9968Ln(x)+12.065 |
| ✕ | COMPARATIVE EXAMPLE 5 | y=10.465Ln(x)+11.735 |

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10100340 A
- US 20100282488
- US 7022402 B

- EP 1498909 A1
- EP 2503558 A1
- JP 2013512535 A